# EUROPEAN PATENT SPECIFICATION

(11) **EP 0 815 440 B1**
(45) Date of publication and mention of the grant of the patent: **05.06.2002**
(21) Application number: 96909803.7
(22) Date of filing: 20.03.1996
(51) Int. Cl.: G01N 27/447

(54) **CAPILLARY ELECTROPHORESIS APPARATUS AND METHOD**
VORRICHTUNG UND VERFAHREN FÜR KAPILLARELEKTROPHORESE
APPAREIL ET PROCEDE D'ELECTROPHORESE CAPILLAIRE

(30) Priority: 21.03.1995 US 408683
(43) Date of publication of application: 07.01.1998
(60) Divisional application: 01121359.2
(73) Proprietor: Aclara Biosciences, Inc., Hayward, CA 94545 (US)
(72) Inventor: BRIGGS, Jonathan, Los Altos Hills, CA 94022 (US); McCORMICK, Randy, M., Santa Clara, CA 95054 (US); HOYT, David, W., Saratoga, CA 95070 (US)
(74) Representative: Vossius, Volker, Dr.
(86) International application number: PCT/US96/03828
(87) International publication number: WO 96/29595

(56) References cited:
- EP-A- 0 359 619
- DE-A- 4 139 211
- US-A- 4 624 769
- US-A- 4 925 629
- US-A- 5 219 528
- US-A- 5 338 427
- US-A- 5 439 578

## Description

### A. Field of the Invention

This invention is in the field of separation of biomolecules and, in particular, separations by capillary electrophoresis and the use of the capillary electrophoresis to detect such molecules.

### B. Background of the Prior Art

Capillary-based separations are widely used for analysis of a variety of analyte species. Numerous subtechniques, all based on electrokinetic-driven separations, have been developed. Capillary electrophoresis is one of the more popular of these techniques and can be considered to encompass a number of related separation techniques such as capillary zone electrophoresis, capillary gel electrophoresis, capillary isoelectric focusing, capillary isotachophoresis, and micellar electrokinetic chromatography. In the context used throughout this application, the phrase "capillary electrophoresis" is used to refer to any and all of the aforementioned electrokinetic separation subtechniques.

Electrophoresis is a separation process in which molecules with a net charge migrate through a medium under the influence of an electric field. Traditionally, slab gel electrophoresis has been a widely used tool in the analysis of genetic materials. See, for example, G. L. Trainor, Anal. Chem., 62, 418-426 (1990). Capillary electrophoresis has emerged as a powerful separation technique, with applicability to a wide range of molecules from simple atomic ions to large DNA fragments. In particular, capillary electrophoresis has become an attractive alternative to slab gel electrophoresis for biomolecule analysis, including DNA sequencing. See, for example, Y. Baba et al., Trends in Anal. Chem., 11, 280-287 (1992). This is generally because the small size of the capillary greatly reduces Joule heating associated with the applied electrical potential. Furthermore, capillary electrophoresis requires less sample and produces faster and better separations than slab gels.

Currently, sophisticated experiments in chemistry and biology, particularly molecular biology, involve evaluating large numbers of samples. For example, DNA sequencing of genes is time consuming and labor intensive. In the mapping of the human genome, a researcher must be able to process a large number of samples on a daily basis. If capillary electrophoresis can be conducted and monitored simultaneously on many capillaries, i.e., multiplexed, the cost and labor for such projects can be significantly reduced. Attempts have been made to sequence DNA in slab gels with multiple lanes to achieve multiplexing. However, slab gels are not readily amenable to a high degree of multiplexing and automation. Difficulties exist in preparing uniform gels over a large area, maintaining gel to gel reproducibility and loading sample wells. Furthermore, difficulties arise as a result of the large physical size of the separation medium, the requirements for uniform cooling, large amounts of media, buffer, and samples, and long run times for extended reading of nucleotide sequences. Unless capillary electrophoresis can be highly multiplexed and multiple capillaries run in parallel, the advantages of capillary electrophoresis cannot produce substantial improvement in shortening the time needed for sequencing the human genome.

Capillary electrophoresis possesses several characteristics which makes it amenable to this application. The substantial reduction of Joule heating per lane makes the overall cooling and electrical requirements more manageable. The cost of materials per lane is reduced because of the smaller sample sizes. The reduced band dimensions are ideal for excitation by laser beams, as well as focused broad band sources, and for imaging onto array detectors or discrete spot detectors. The concentration of analyte into such small bands results in high sensitivity. The use of electromigration injection, i.e., applying the sample to the capillary by an electrical field, provides reproducible sample introduction with little band spreading, minimal sample consumption, and little labor.

Among the techniques used for detecting target species in capillary electrophoresis, laser-excited fluorescence detection so far has provided the lowest detection limits. Therefore, fluorescence detection has been used for the detection of a variety of analytes, especially macromolecules, in capillary electrophoresis. For example, Zare et al. (U.S. Patent No. 4,675,300) discusses a fluoroassay method for the detection of macromolecules such as genetic materials and proteins by capillary electrophoresis. Yeung et al. (U.S. Patent No. 5,006,210) presented a system for capillary zone electrophoresis with indirect laser-induced fluorescence detection of macromolecules, including proteins, amino acids, and genetic materials.

Systems such as these generally involve only one capillary. There have been attempts to implement the analysis of more than one capillary simultaneously in the electrophoresis system, but the number of capillaries has been quite small. For example, S. Takahashi et al., Proceedings of Capillary Electrophoresis Symposium, December, 1992, referred to a multi-capillary electrophoresis system in which DNA fragment samples were analyzed by laser irradiation causing fluorescence. This method, however, relies on a relatively poor focus (large focal spot) to allow coupling to only a few capillaries. Thus, this method could not be applied to a large number of capillaries. This method also results in relatively low intensity and thus poor sensitivity because of the large beam. Furthermore, detection in one capillary can be influenced by light absorption in the adjacent capillaries, thus affecting accuracy due to cross-talk between adjacent capillaries.

Attempts have been made to perform parallel DNA sequencing runs in a set of up to 24 capillaries by providing laser-excited fluorometric detection and coupling a confocal illumination geometry to a single laser beam and a single photomultiplier tube. See, for example, X. C. Huang et al., Anal. Chem., 64, 967-972 (1992), and Anal. Chem., 64, 2149-2154 (1992). Also see U.S. Patent No. 5,274,240. However, observation is done one capillary at a time and the capillary bundle is translated across the excitation/detection region at 20 mm/sec by a mechanical stage.

There are features inherent in the confocal excitation scheme that limit its use for very large numbers of capillaries. Because data acquisition is sequential and not truly parallel, the ultimate sequencing speed is generally determined by the observation time needed per DNA band for an adequate signal-to-noise ratio. Moveover, the use of a translational stage can become problematic for a large capillary array. Because of the need for translational movement, the amount of cycling and therefore bending of the capillaries naturally increases with the number in the array. It has been shown that bending of the capillaries can result in loss in the separation efficiency. This is attributed to distortions in the gel and multipath effects. Sensitive laser-excited fluorescence detection also requires careful alignment both in excitation and in light collection to provide for efficient coupling with the small inside diameter of the capillary and discrimination of stray light. The translational movement of the capillaries thus has to maintain stability to the order of the confocal parameter (around 25 µm) or else the cylindrical capillary walls will distort the spatially selected image due to misalignment of the capillaries in relation to the light source and photodetector. In addition, long capillaries provide slow separation, foul easily, and are difficult to replace.

U.S. Patent No. 5,324,401 to Yeung et al. describes a multiplexed capillary electrophoresis system where excitation light is introduced through an optical fiber inserted into the capillary. In this system the capillaries remain in place, i.e. in the buffer solutions when the capillaries are read.

U.S. Patent No. 5,332,480 (Datta et al.) describes a multiple capillary electrophoresis device for continuous batch electrophoresis.

U.S. Patent No. 5,277,780 (Kambara) describes a two dimensional capillary electrophoresis apparatus for use with a two dimensional array of capillaries for measuring samples, such as DNA samples, in an array of test wells.

U.S. Patent 5,413,686 (Klein and Miller) describes a multi-channel automated capillary electrophoresis analyzer in which multiple individual separation capillaries are installed in a instrumental analyzer which serves to flush and fill the capillaries and associated buffer reservoirs from supplies of buffer situated within the instrument.
U.S. Patent 5,439,578 (Dovichi and Zhang) describes a multiple capillary biochemical analyzer based on an array of separation capillaries terminating in a sheath flow cuvette. The use of the sheath flow cuvette facilitates detection of the analyte bands by reducing the magnitude of scattered radiation from the detection zone.

U.S. Patent No. 5,338,427 (Shartle et al.) describes a single use capillary cartridge having electrically conductive films as electrodes; the system does not provide for multiplexed sampling, sample handling, and electrophoresis.

U.S. Patent Nos. 5,091,652 (Mathies et al.) and 4,675,300 (Zare et al.) describe means for detecting samples in a capillary.

U.S. Patent 5,372,695 (Demorest) describes a system for delivering reagents to serve a fix capillary scanner system.

Numerous examples of sample handling for capillary electrophoresis are known. For example, James in U.S. 5,286,652 and Christianson in U.S. 5,171,531 are based on presenting a single vial of sample to a single separation capillary for a sequential series of analyses.

Goodale in U.S. 5,356,525 describes a device for presentation of a tray of 7 vials of samples to an array of seven capillaries for the sample injection process.

Carson in U.S. 5,120,414 describes injection of a sample contained within a porous membrane onto a single-capillary electrophoresis device. The end of the capillary must be in intimate contact with the porous membrane to effect sample introduction into the capillary.

In contrast, the present invention provides short disposable capillaries mounted in a frame which is integral with a liquid handling system. This system permits a rapid multiplexed approach to capillary electrophoresis.

Numerous examples of multi-well devices with integral membranes are known (e.g. Mann in U.S. 5,043,215, Matthis in U.S. 4,927,604, Bowers in U.S. 5,108,704, Clark in U.S. 5,219,528). Many of these devices attach to a base unit which can be evacuated, drawing samples through the membrane for filtration.

Numerous examples of multi-channel metering devices such as multi-channel pipettes are known. One example is described in a device by Schramm in U.S. 4,925,629, which utilizes an eight-channel pipette to meter samples/reagents to/from multi-well plates. A second example is a 96-channel pipetting device described by Lyman in U.S. 4,626,509. These devices use positive displacement plungers in corresponding cylinders to draw in and expel liquid in the sampling/metering step.

Finally, Flesher in U.S. 5,213,766 describes a 96-channel device which contains flexible "fingers" which can be deformed out of a common plane; each "finger" can be deflected into a well of a multi-well plate to acquire a small aliquot of sample by one of several mechanisms.

The present invention differs in that it provides for simultaneously sampling of an array of samples; simultaneously handling the samples and presenting an array of the samples for capillary electrophoresis; simultaneously transferring the array of presented samples to an array of capillaries; and simultaneously conducting separations in the capillary electrophoresis columns.

### SUMMARY OF THE INVENTION

The present invention encompasses methods and apparatus for simultaneously transferring samples from an array of sample holders to an array of capillary electrophoresis columns, simultaneously conducting electrophoresis, and analyzing the capillary electrophoresis columns.

The invention encompasses a separation plate (100) comprising:
a) a frame (102) having first and second ends and having an array of separation capillaries (101) with first and second ends mounted in the frame;
b) the first end of the frame having at least one common buffer reservoir (103) and at least one electrode (104) in the common buffer reservoir (103) wherein the first ends of the capillaries are in liquid communication with the common buffer reservoir (103); and
c) the second end of the frame (102) having means for placing the second ends of the capillaries in contact with an array of sample sites (85) or run buffer sites which are each in contact with an electrode (105) and wherein there is liquid communication between the common buffer reservoir (103) at the first end of the frame and the array of sample sites (85) or the run buffer sites at the second end of the frame (102) through the separation capillaries (101) and there is electrical communication between the electrode (104) in the common buffer reservoir (103) at the first end of the frame and each electrode (105) in the array of sample sites (85) or run buffer sites of the second end of the frame by way of the separation capillaries (101).

The invention further encompasses an apparatus for processing an array of samples (85) containing two or more components in an array of sample containers comprising:
a) a sample handling plate (71) which defines an array of sample handling plate wells (74) and an array of sipper capillaries (82) having an inner wall, an outer wall, a distal end, a proximal end, and an inner bore diameter and an outer bore diameter, wherein each well of the sample handling plate (71) is in liquid communication with at least one sipper capillarie (82) and wherein a porous matrix (80) is interposed between each sipper capillary (82) and the corresponding sample handling plate well (74), and wherein the array of sipper capillaries (82) will simultaneously fill with sample by capillary action from the array of sample containers;
b) a base plate (72) which defines an opening to receive the sample handling plate (71) and which defines an inner chamber with means associated with the base plate (72) and the sample handling plate (71) to seal the inner chamber (69) and to provide a sealed inner chamber; and
c) means for pressurizing and evacuating the sealed inner chamber (69) to move liquid on either side of the porous matrix (80) to the other side of the porous matrix.

The invention further encompasses a method for analysis of an array of samples (85) in an array of sample containers by capillary electrophoresis, said method comprising:
a) acquiring an array of aliquots of sample from an array of samples (85) in sample containers;
b) simultaneously processing the array of samples (85) to provide an array of processed samples and presenting the array of processed samples for capillary electrophoresis;
c) simultaneously transferring an array of processed samples to an array of capillary electrophoresis columns (101) using the apparatus for processing an array of samples described above;
d) simultaneously conducting capillary electrophoresis on the array of the capillary electrophoresis columns (101) from (c); and
e) analyzing capillary electrophoresis columns (101) from (d).

The invention also encompasses, in another embodiment, a separation plate (1) comprising a frame having a common buffer reservoir (3) at one end and a plurality of sample sites (2) at the other end and having an electrode (5,7) at each end, wherein a cell electrode (6) is disposed in each of the sample sites (2) and connected to electrode (5) placed at the end of the frame close to said sample sites (2) and a means for mounting separation capillaries (8) on the frame so that there is electrical communication between the electrodes (5,7) and fluid communication between the sample sites (2) and the common buffer reservoir (3) when there is fluid in the sample sites (2), the separation capillaries (8), and the common buffer reservoir (3). The separatrion plate may be transportable so that it can be moved to various locations and stored.

The electrophoresis plate comprises a frame with at least one reservoir at one end. The electrophoresis plate has a means for mounting a plurality of capillary electrophoresis columns, having first and second ends, on the frame so that there is fluid communication between the reservoir and the first end of the plurality of capillaries, when there is fluid in the reservoir, and a plurality of sample introduction sites near or at the second end of the capillaries. There is a means to make electrical connection to each end of the frame, with at least one common electrode in the reservoir in the frame at the first end of the capillaries and at least one electrode in a second common reservoir in the base plate in fluid communication with the plurality of sample sites at the second end of the capillaries. There is a plurality of electrodes electrically connected in parallel and positioned in each of the sample introduction sites at the second end of the capillaries. This arrangement of electrodes provides for electrical communication between the electrodes at each end of the frame and the capillaries, when there is fluid in the reservoirs, capillaries and the sample introduction sites.

The invention includes methods for analyzing samples of substances which are separable by electrophoresis providing an electrophoresis plate having a plurality of electrophoresis columns, simultaneously transferring sample from the multiple samples to the electrophoresis columns in the plate, simultaneously conducting electrophoresis on the columns in the plate to separate the substance to be analyzed and analyzing the substance(s) to be analyzed which are separated in the electrophoresis columns in the electrophoresis plate. The capillary columns may be dynamically analyzed by detecting a separated band as it moves past a stationary analysis system, or the columns may be scanned by a moveable analysis system, or imaged by an array detector.

The present invention has many advantages over conventional electrophoresis technology, whereas in the prior art the confirmation of proper amplification of nucleic acids by conventional separation on gels takes hours, whereas, the system of this invention can do confirmation in about 10 minutes. Conventional gel separations are manually intensive. The invention only requires sample introduction, with the separation, detection and analysis being automatic. The invention system will perform confirmations in parallel. For example, 96 samples can be processed on a standard gel, but only with compromises in resolution and sensitivity.

The invention system can resolve a difference of 2-3 base pairs among double stranded DNA fragments of 200-300 bps. If 96 samples are run in parallel on a single standard gel, resolution for the same range of targets would be 5 to 10 fold poorer. Working with samples of unpurified PCR-amplified DNA, the present system found multiple amplified targets in several samples where the standard gel methods only detected a single band.

The present invention system typically requires only 1 to 5 % of the amount of sample used on a standard gel because of the high sensitivity and hence less amplified material is required, reducing reagent cost and/or amplification time.

The capability to add a common reagent to multiple samples, mix and react means that the primary amplification step could be done on the sample handling plate, with an appropriately designed thermocycler, with the benefits of amplification done in discrete small volumes, in parallel with precise timing, with a minimum of carry-over and cross contamination.

This invention has advantages with regard to quantitation of amplified nucleic acids. After amplification, the standard methods are patterned after conventional immunoassays requiring solid phase reactions (on the surface of 96-well plates or on beads), followed by washes for separation and subsequent reactions for signal generation. The whole procedure takes several hours, with many steps, and with marginal sensitivity and precision.

The present invention system can perform a quantitative determination in a much simpler format. The target is amplified with sequence specificity in the standard way; that is, for PCR™, specificity is derived from the primers and for LCR™ specificity is derived from the ligation of adjacent hybridized probes. Then the amplified material is separated on columns and the amount of target is measured at the anticipated position on the column, based on the size of the target. That is, one quantitates the amount of target, in addition to obtaining a size-based confirmation without the need for any solid phase reactions. If additional sequence specificity is required, then an additional hybridization step could be incorporated into the procedure.

Since reactions are in the liquid phase, the invention system provides greater speed, greater specificity and less background biochemical noise and quantitation is achieved in tens of minutes instead of hours.

The present invention system has demonstrated the detection of as little as 8 million DNA molecules (300 to 1300 bps) in the sample and therefore has high sensitivity. Because of the high sensitivity of the present system, less biological amplification is required. For example, 20 PCR™ cycles operating at optimum efficiency will produce 1 million molecules, starting from a single target molecule in the sample. Conventional quasi-quantitative methods typically require 30 to 40 cycles to produce enough target for reliable detection. However, the biological gain per cycle decreases as one amplifies at the higher cycle numbers (experts agree that such variability can occur at greater than about 20 cycles). This variability is a primary cause for the lack of assay precision in the conventional methods. The present invention system only requires 2 µl of sample, reducing the amount of primers, bases, enzymes, etc. required for the amplification step.

The capability to add a common reagent to multiple samples, mix and react means that the primary amplification step could be done on the sample handling plate, with an appropriately designed thermo-cycler, with the benefits of amplification done in discrete small volumes, in parallel with precise timing, with a minimum of carry-over and cross contamination.

Many of these advantages are also achieved with regard to conventional binding assays such as ELISA's. For example, quantitation can be done in 10's of minutes on 2 µl sample volumes. The capability to add a common reagent to multiple samples in, for example, a 96-well or a multi-well plate, mix, and react on the sample handling plate means that a primary reaction step (e.g. displacement of a common ligand to a receptor) can be done in discrete small volumes, in parallel with precise timing, with a minimum of carry-over and cross contamination, and without contamination of the starting material (e.g. any array or library of compounds).

### BRIEF DESCRIPTION OF THE FIGURES

Figure 1 is a perspective view of the electrophoresis separation plate.
Figure 2 is a cross-sectional view of the separation plate through a capillary.
Figure 3a shows an exploded sectional view of the well with the well electrode and capillary positioned in the well.
Figure 3b shows a sample injected into the well.
Figure 3c shows the well with buffer and sample in the well.
Figure 3d shows the well when the buffer has diluted the sample.
Figure 4a-c shows a schematic of how the components of the system interact.
Figure 5a shows a cross-sectional view of several sample handling plate wells.
Figure 5b shows a schematic of liquid flow from sipper capillary to sample handling plate well.
Figure 6 shows flow of sample into sipper capillary.
Figure 7a - 7e shows the flow of sample and reagent mixing.
Figure 8 shows sample handling plate with sample handling plate well and waste and primary buffer wells.
Figure 9 shows top plan view of a preferred separation plate.
Figure 10 shows a cross-sectional view of the preferred separation plate through a capillary.
Figure 11 shows a schematic diagram of the optical system for reading capillaries.
Figure 12 shows a graph of *Msp 1* pBR322 separation.
Figure 13 shows a trace of a separation of single stranded DNA fragments differing by one base.
Figure 14 shows separation of unknown DNA samples derived from PCR™ amplification.
Figure 15 shows separation of a protein/binding partner complex.
Figure 16 shows a plot of the concentrations of a separation of a displaced labeled peptide versus concentration of a competitor.
Figure 17 illustrates the limits of detection of DNA.
Figure 18 shows the efficiency of mixing of two samples in the sample handling plate.
Figure 19 illustrates the reproducibility of simultaneous sipping, sample handling, electrophoresis and then analysis of DNA samples.
Figure 20a shows a preferred embodiment of the separation plate composed of an array of 8 separation capillaries in a frame along with an integral buffer reservoir for supplying the separation capillaries and associated run buffer wells with run buffer
Figure 20b shows a cross-sectional view of a separation plate/sample handling plate assembly and illustrates the preferred embodiment of the geometry and positioning of the run buffer wells on the sample handling plate and the separation plate.
Figure 21 a and b each illustrate an embodiment of the sipper/porous matrix/sample handling well feature on the sample handling plate.

### DETAILED DESCRIPTION OF THE INVENTION

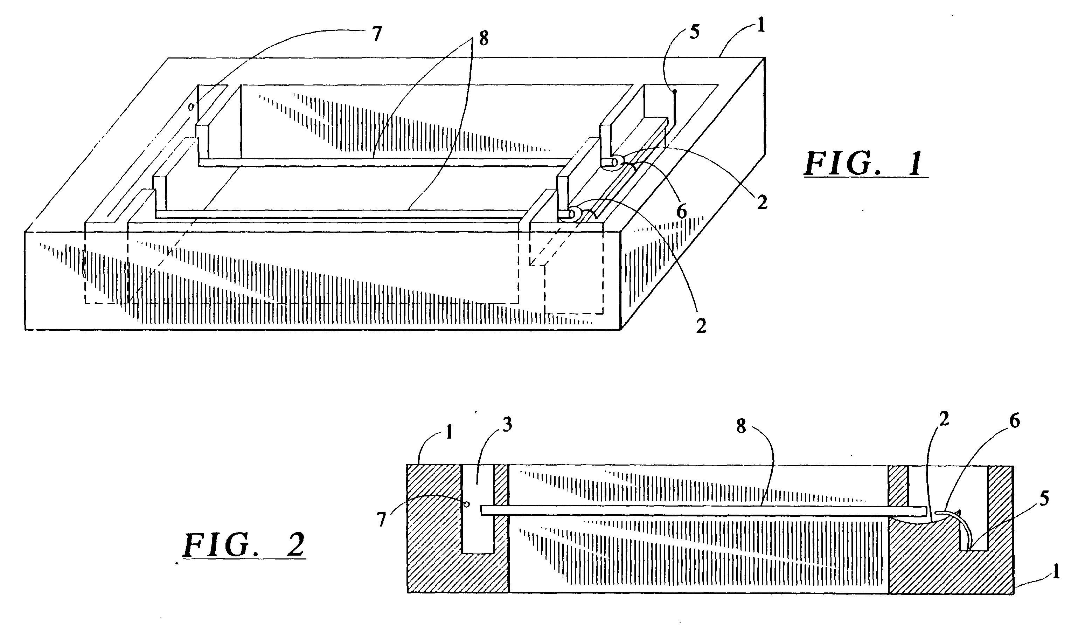

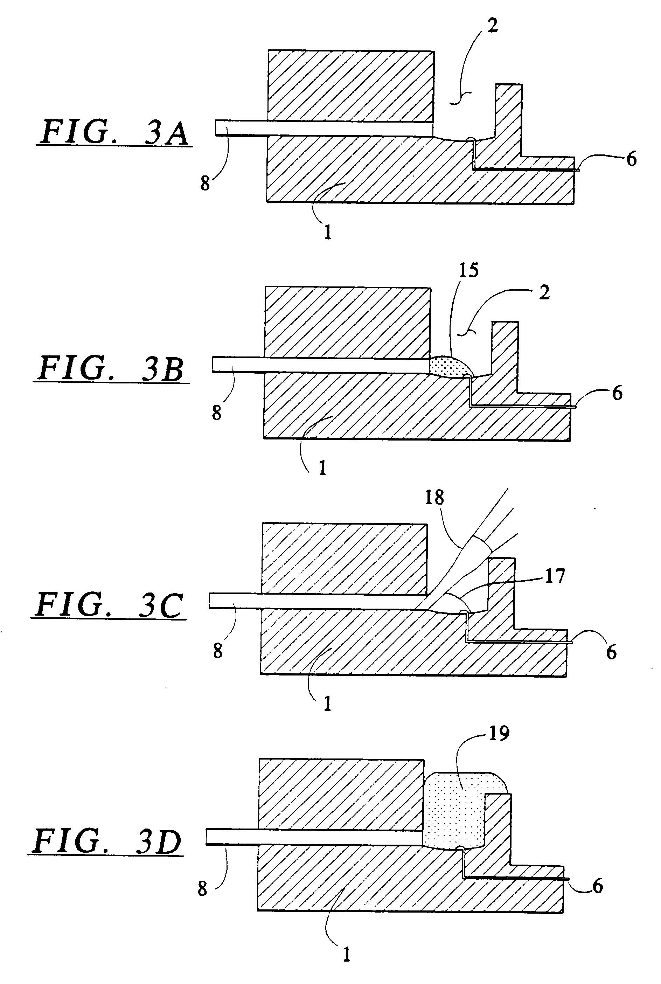

The invention includes as shown in Figures 1 and 2 an elongated electrophoresis separation plate 1 which has a plurality of sample wells 2 at one end and a common buffer reservoir 3 at the other end. A first master electrode 5 is electrically connected to a cell electrode 6 in the sample wells 2. A second master electrode 7 is in the common buffer reservoir 3. Capillary electrophoresis columns 8 are mounted in the plate 1 so that there is electrical communication between the first master electrode 5 by way of the capillary electrophoresis column 8 when the sample wells 2 and the reservoir 3 are filled with electrically conductive liquid. In operation, current between the master electrodes permits electrophoresis of the sample from the sample well 2 to the reservoir 3.

Figure 3a is a partial sectional view through a sample well 2 showing the well electrode 6 and capillary electrophoresis column 8. Figure 3b illustrates the injection of a sample 15 so that there is liquid communication between the capillary 8 and cell electrode 6. The sample is loaded on the capillary via electromigration injection and then the residual sample in well 2 is diluted with buffer 19 before the electrophoresis process takes place as shown in Figure 3d. In an alternative implementation, Figure 3c shows a mechanical liquid transfer system where about 4 µl of buffer 17 is first added to establish liquid communication between the capillary 8 and cell electrode 6. Then 4 µl of sample 18 contained within a pipetter tip is placed in contact with the buffer 17 and sample is loaded on the column via electromigration injection. After removing the pipette tip, the well is then filled with buffer 19 as shown in Figure 3d and the electrophoresis is conducted.

Sample may be made available for injection from the introduction site to the capillary such that only small aliquots of the primary sample are required at the introduction sites, quantitative injection is possible, and there is a minimum of carryover from one injection to another (if the plates are reused). Such sample introduction may be accomplished by a variety of means, including:
a) physically moving the capillaries relative to the introduction sites and immersing the tips of the capillaries into the respective sample aliquots positioned within the introduction sites. In this embodiment the plurality of sample introduction sites might be constructed on a separate disposable part, which moves into position for sample introduction, and then is disposed.
b) physically moving the capillaries relative to the introduction sites and bringing the tips of the capillaries to the close proximity of the sample aliquots in the introduction sites.
c) each introduction site is permanently immediately adjacent to the respective capillary tip.

Sample injection may be accomplished, simultaneously and in parallel, for the plurality of capillaries by a variety of means, including:
a) electroinjection, under the action of an electric field due to a voltage difference applied to the appropriate electrodes.
b) pressure injection, under the action of a pressure or suction applied to the fluid at one or both ends of the capillaries.

With regard to electrodes, some or all of the electrodes may be within the sample handling plate or within the electrophoresis separation plate, with external connections to power supplies, or some or all of the electrodes might be on a separate part (e.g. built into the injection and separation station), such that the electrodes can be immersed into the appropriate fluid reservoirs at the time of injection or separation. The electrodes may also be integral with the separation plate. They may be strip metal electrodes formed in a stamping process or chemical etching process. The electrodes may be wires or strips either soldered or glued with epoxy and can be made of conductive materials such as platinum, gold, carbon fibers and the like. The electrodes would preferably be an integral part of the separation plate and could be deposited, coated or plated onto a section of the exterior wall of the capillary near each end of the capillary. Controlled vapor deposition of gold, platinum, or palladium metal onto the exterior wall of the capillary is one method of forming the electrodes. This technique can be used to produce an electrode layer with a thickness up to several microns. Thicker electrodes could be subsequently formed by electrochemically plating gold, palladium or platinum onto the thin electrode formed by the vapor deposition process. Electrodes could be integral with the sample handling plate formed by silk screening process, printing, vapor deposition, electrode-less plating process, etc. Carbon paste, conductive ink, and the like could be used to form the electrode.

Those skilled in the electrophoresis arts will recognize a large number of capillaries useful for practicing this invention. For example, fused silica is used with an outside coating of polyimide for strengthening, with inside bore ID's from 10 to 200 microns, more typically from 25 to 100 microns, and OD's greater than 200 microns. Internal coating may be used to reduce or reverse the electroosmotic flow (EOF). The simplest "coating" involves running at a low pH such that some of the silanol negative charge is neutralized. Other coatings include: silylation, polyacrylamide (vinyl-bound), methylcellulose, polyether, polyvinylpyrrolidone (PVP), and polyethylene glycol. Capillaries made from other materials such as glass, polypropylene, Pyrex™ and Teflon™ may also be used. In addition, capillaries prepared by microfabrication techniques in which a small channel is etched into a planar substrate such as glass, silica, or ceramic couldalso be used.

Conventional buffers include the Good's buffers (HEPES, MOPS, MES, Tricine, etc.), and other organic buffers (Tris, acetate, citrate, and formate), including standard inorganic compounds (phosphate, borate, etc.). Two preferred buffered systems are:
i) 100 mM sodium phosphate, pH 7.2
ii) 89.5 mM tris-base, 89.5 mM Boric acid, 2 mM ETDA, pH 8.3.
Buffer additives include: methanol, metal ions, urea, surfactants, and zwitterions intercalating dyes and other labeling reagents. Polymers can be added to create a sieving buffer for the differential separation of DNA based on fragment length. Examples of such polymers are: polyacrylamide (cross-linked or linear), agarose, methylcellulose and derivatives, dextrans, and polyethylene glycol. Inert polymers can be added to the separation buffer to stabilize the separation matrix against factors such as convection mixing.

Alternatively, buffers containing micelles could be used for effecting separation of electrically neutral or hydrophobic analyte species. The micelles are formed in the buffer by addition of an appropriate surfactant at a concentration exceeding the critical micelle concentration of that detergent. Useful surfactants include but are not limited to sodium dodecyl sulfate, dodecyltrimethyl ammonium bromide, etc. Weakly charged or apolar analytes partition into the micelles to different degrees depending upon their degree of hydrophobicity and thus can be separated. This subtechnique of capillary electrophoresis is termed micellar electrokinetic chromatography.

Those skilled in the electrophoresis arts will recognize a wide range of useable electric field strengths, for example, fields of 10 to 1000 V/cm are used with 200-600 V/cm being more typical. The upper voltage limit for the commercial systems is 30 kV, with a capillary length of 40-60 cm, giving a maximum field of about 600 V/cm. There are reports of very high held strengths (2500 - 5000 V/cm) with short, small bore (10 microns) capillaries micro-machined into an insulating substrate.

Normal polarity is to have the injection end of the capillary at a positive potential. The electroosmotic flow is normally toward the cathode. Hence, with normal polarity all positive ions and many negative ions will run away from the injection end. Generally, the "end-of-capillary" detector will be near the cathode. The polarity may be reversed for strongly negative ions so that they run against the electroosmotic flow. For DNA, typically the capillary is coated to reduce EOF, and the injection end of the capillary is maintained at a negative potential.

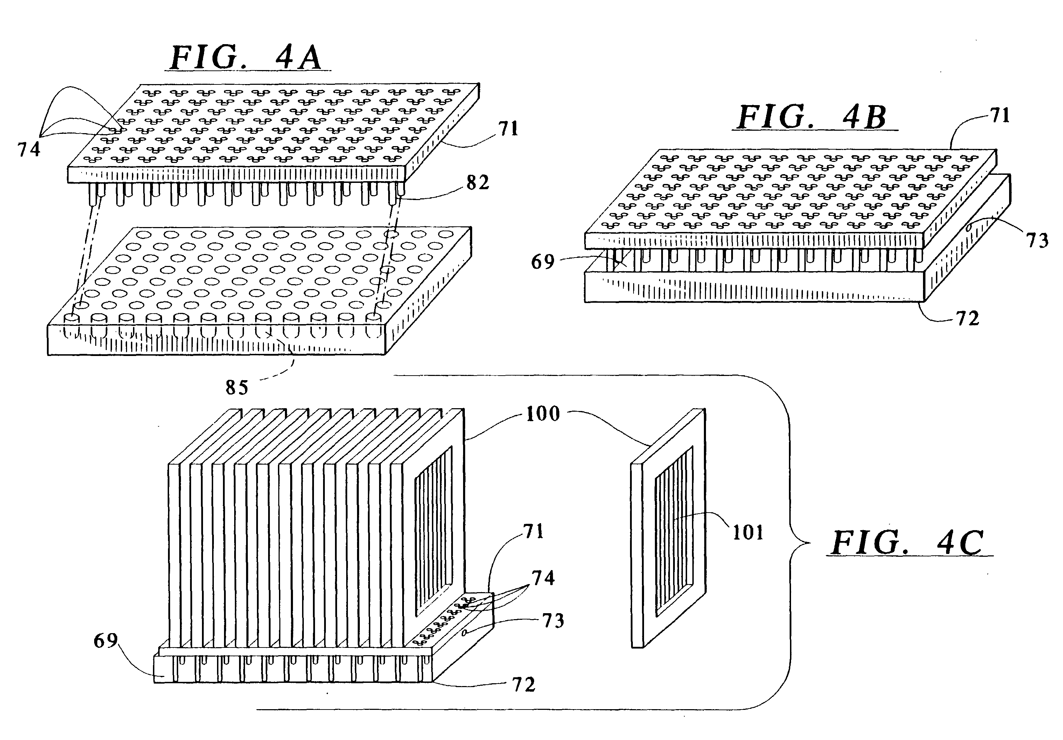

Figures 4a-c show the interaction of various parts of the electrophoresis system. Figure 4a shows the sample handling plate 71 with an array of sample handling wells 74 with an corresponding array of sipper capillaries 82. The array of sipper capillaries is aligned with wells of a multiwell plate which contain samples 85. When the sipper capillaries 82 are in the sample, an aliquot of sample is transferred to the sipper capillary by capillary action. The sample handling plate 71 is then moved to base plate 72, as shown in Figure 4b. Sample handling plate 71 and base plate 72 fit together to form a sealed inner chamber 69 which can be pressurized or evacuated through port 73. In this way, the samples in sipper capillaries 82 can be manipulated and eventually presented in sample handling wells 74 for electrophoresis. Figure 4c shows how the electrophoresis separation plate(s) 100 containing an array of electrophoresis capillaries 101 are aligned with the sample handling plate wells 74. A stack of separation plates 100 is formed to provide an array of separation capillaries that conforms to the spacing format of the sample handling wells 74 in sample handling plate 71 or to the spacing format of a multiwell plate that contains samples 85.

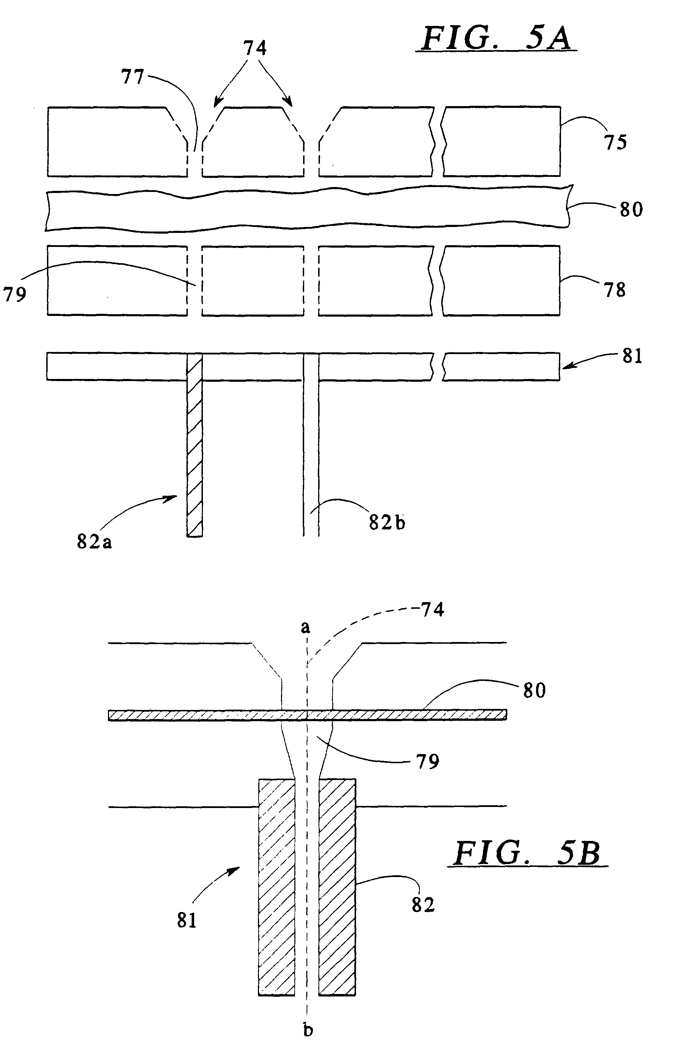

Figure 5a shows a cross-sectional view through several wells 74. The sample handling plate 71 is assembled from a sampling block 75 which defines the funnel shaped base wells with openings 77. Mixer block 78 has passages 79 which are aligned with openings 77. The mixer block 78 and sampling block 75 are separated by a porous matrix 80, such as a membrane. Aligned with mixer block 78 is sipper block 81 with sipper capillaries 82. 82a is filled with sample and 82b is not. The sipper block 81, mixer-block 78, and sampling block 75 are fastened together so that a channel a-b is defined which is interrupted by the matrix 80 as shown in Figure 5b. Sipper capillaries can be constructed by any number of means. A major requirement is that the sipper capillaries must be sufficiently hydrophilic to draw in several microliters of liquid sample by capillary action. A suitable sipper capillary could be constructed from glass or silica tubing of appropriate dimensions. Alternatively, a suitable sipper capillary could be constructed from a plastic material such as polyethylene, polypropylene, polycarbonate, polysulfone, etc. In the case of sipper capillaries constructed from plastic materials, however, the inner bore of the plastic sipper capillary must be treated in some way to make the inner walls of the sipper capillary sufficiently hydrophilic to draw in the sample by capillary action. Appropriate treatments for altering the normally hydrophobic surface of the plastic sippers and imparting hydrophilicity to the inner walls include coating the walls with a surfactant or wetting agent, grafting a layer of hydrophilic polymer onto the wall of the hydrophobic sipper capillary or treating the walls of the sipper capillary by plasma etching.

The volume of sample drawn into the sipper capillary is controlled by the length and the bore diameter of the sipper capillary. Typically, the bore diameter will be several hundred microns and the length of the sipper capillary could range up to 10-20 mm. Sipper capillaries of these dimensions can fill with sample volumes in the 1 to 10 µL range. The volume of fluid drawn into the sipper capillary can be controlled by carefully defining the bore diameter of the sipper capillary and by defining the length of the sipper capillary. The latter dimension can be defined by positioning a stop junction along the inner wall of the sipper capillary. This stop junction could be an abrupt increase in the bore diameter of the sipper capillary. Alternatively, using the techniques describe above, only a defined length of the inner wall of the sipper capillary could be made sufficiently hydrophilic to draw in aqueous sample by capillary action; the boundary between the hydrophilic and hydrophobic surfaces of the inner wall would thus define stop junction.

Matrix 80 is typically made of a wide variety of porous matrix materials where, for most applications, the porous matrix materials should have little or no affinity for sample. Useful porous matrix materials include membrane materials such as regenerated cellulose, cellulose acetate, polysulfone, polyvinylidine fluoride, polycarbonate and the like. For DNA samples, a cellulose acetate membrane such as that available from Amicon is useful. For protein samples, a membrane composed of polysulfone such as those available from Amicon or Gelman is useful.

Alternatively, porous matrix 80 could be a porous cylindrical or spherical plug of sintered polymer particles. Such porous materials are available from Porex or Interflow and are typically comprised of a bed of small polymeric particles that have been fused together by heat and pressure (sintering) to form a porous plug of predefined geometry. The bed of particles forms a network of tortuous interstitial pores through which the sample is passed and subsequently mixed.

Generally, porous matrix 80 is an inert matrix that serves to mix the sample and added reagent upon passage through the pores of the matrix. However, porous matrix 80 might also be designed to provide some selective fractionation function to remove unwanted species from the sample. For example, porous matrix 80 might also serve as a filtering medium to purify the sample of particulate debris prior to injection into the capillary.

In another implementation, porous matrix 80 might be an ultrafiltration membrane with a defined molecular weight cut-off, such that porous matrix 80 will allow small molecular weight components to pass through porous matrix 80. The molecular weight cut-off of ultrafiltration membranes can vary considerably, ranging typically from approximately 1,000 to upwards of 500,000 Daltons. Thus, an ultrafiltration membrane with a molecular weight cut-off of 1,000 daltons would allow components with molecular weights lower than ∼ 1,000 Daltons to pass through while retaining components with molecular weights greater than 1,000 Daltons. By proper selection of the molecular weight cut-off of the membrane used as porous matrix 80, small molecular weight components of the sample are passed through the membrane, whereas high molecular weight components are retained ibelow the membrane.

Alternatively, porous matrix 80 could be derivatized with some biochemical agent to impart a selective binding capability to matrix 80; in this instance, porous matrix 80 could also serve to remove high concentrations of a specific biomaterial or specific class of biomaterials from the sample prior to injection into the capillary. Specific examples of the biochemical agent used to derivatize the porous matrix would be protein G (used to remove immunoglobulins) or lectins (used to remove carbohydrates). Alternatively, porous matrix 80 could be derivatized with biotin or streptavidin, thereby permitting attachment of a variety of appropriated derivatized (biotinylated) species to porous matrix 80.

Porous matrix 80 also serves another important function to prevent loss of the mixed volume of sample/fluid from the sipper during the pressurization/evacuation protocol implemented during the mixing step. The mixed volume of sample/fluid is slowly passed through the porous matrix during the pressurization phase of one cycle of the mixing step. When the trailing edge meniscus of the sample/fluid bolus reaches the face of porous matrix 80, flow of the sample/fluid bolus will stop as the pressurization gas reaches the face of porous matrix 80. This occurs because of differences in surface tension-induced forces that originate when the porous plug is contacted by the pressurization gas versus contact by the sample/fluid solution. Likewise, during the evacuation phase of the mixing cycle when the sample/fluid is passing back through porous matrix 80 in the opposite direction, the flow of sample/fluid will stop when the opposite meniscus of the sample/fluid bolus contacts the opposite face of porous matrix 80. In the absence of porous matrix **80** in the flow conduit in the sipper capillary, the sipped sample and any added reagents could be ejected from the sipper capillary flow conduit during the pressurization or evacuation phase of the mixing cycle.

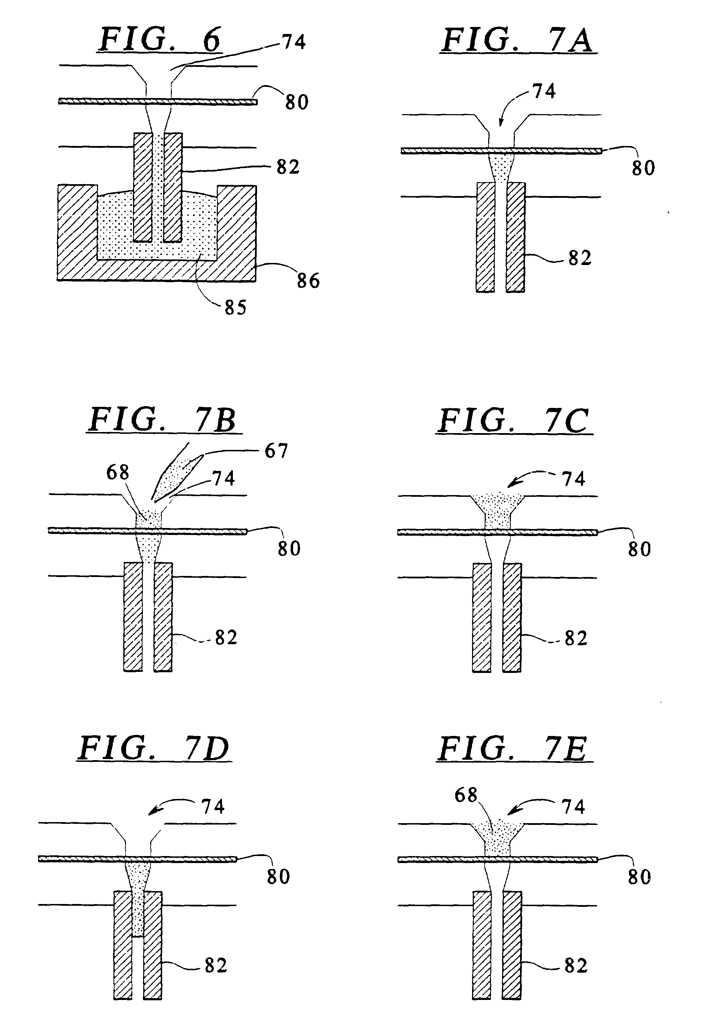

Figure 6 illustrates the flow of sample 85 from a well of a multiwell plate 86 into sipper capillary 82. Thus the ends of the array of sipping capillaries 82 on sample handling plate 71 are dipped into samples contained in an array of samples such as a 96 well plate and the samples are metered into the sipping capillaries by capillary action. At this point, the sample handling plate 71 with its sipper capillaries filled with samples is placed on base 72 to form a sealed inner chamber 69, Figure 4b.

Figure 7a - 7e illustrates the flow of sample in response to pressurization and evacuation of the inner sealed chamber 69 through port 73. For example, a positive pressure moves the sample from the sipping capillary 82 to the area below the porous matrix, as shown in 7a, through the membrane, and into the well 74 above the membrane in plate 71. Reagents 67 can be added to the wells 74 as shown in Figure 7b and the reagent and sample can be mixed as shown in 7c and 7d by forcing the sample and reagent back and forth through the membrane 80 in response to pressurization and evacuation of the inner sealed chamber 69. Finally, the mixed sample 68 is presented in well 74 for injection into an electrophoresis column as shown in 7e.

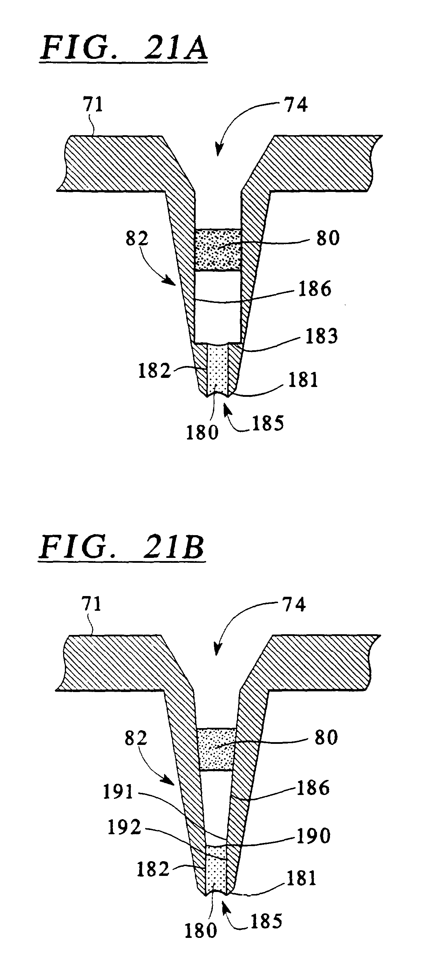

Figure 21a shows a preferred embodiment of the sipper components of the sample handling plate. Sample handling plate 71 is composed of an array of sipper capillaries one capillary 82, one of which is illustrated. Sipper capillary 82 in conjunction with porous matrix 80 and sample handling plate well 74 constitute a flow channel in which sample 180 is manipulated. Sipper capillary 82 is composed of a conduit region 182 which spontaneously fills with sample **180** when proximal end 185 is immersed in sample. The conduit region 182 must be sufficiently hydrophilic to allow the conduit to spontaneously fill with sample by capillary action. The distal end of the conduit region 182 is terminated by stop junction 183 in the conduit bore. Sample fluid will spontaneously fill the conduit 182 until the fluid level reaches the level of the stop junction 183. Thus the conduit region defined by the proximal end and the stop junction in conjunction with the bore of the conduit region determine the volume of fluid "sipped" into the sipper capillary. The proximal end 185 of the sipper capillary 82 is formed with a chamfer 181 on the exterior wall to minimize the volume of sample that could cling to the exterior wall of the sipper capillary.

Situated upstream inside the enlarged bore region 186 of the sipper capillary as defined by the stop junction is porous matrix 80. Porous matrix 80 is ideally a cylindrical porous plug formed from sintered polymeric particles. Further upstream of porous matrix 80 is sample handling plate well 74, where the sample is presented for injection into the separation capillary.

Figure 21b depicts another embodiment of the sipper components, where the stop junction is replaced with a junction defined by the boundary 190 between sections of hydrophobic 191 and hydrophilic 192 wall which form the inner bore of the sipper capillary. The inner wall of 192 is sufficiently hydrophilic to draw in sample and fill conduit 182 with fluid 180. The rise of sample fluid inside the conduit is terminated when the advancing fluid level reaches the boundary 190, where the sample fluid will no longer wet the inside wall of the sipper because of the presence of hydrophobic wall 191 and capillary action stops.

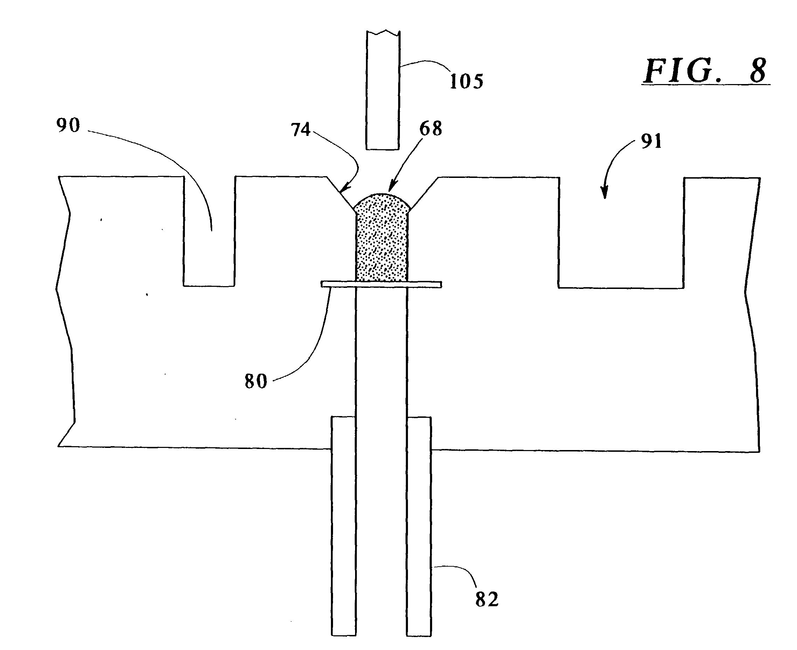

Figure 8 illustrates the sample well 74 flanked with a well for waste electrophoresis buffer 90 from a previous separation and a well for fresh run buffer 91 which is deposited from a capillary 105 during a flushing before injecting presented sample from the sample handling well into the capillary 105 and then used during the electrophoresis separation. The capillary 105 addresses the waste 90, buffer 91 and sample 74 positions by moving the separation plate with respect to the sample handling plate.

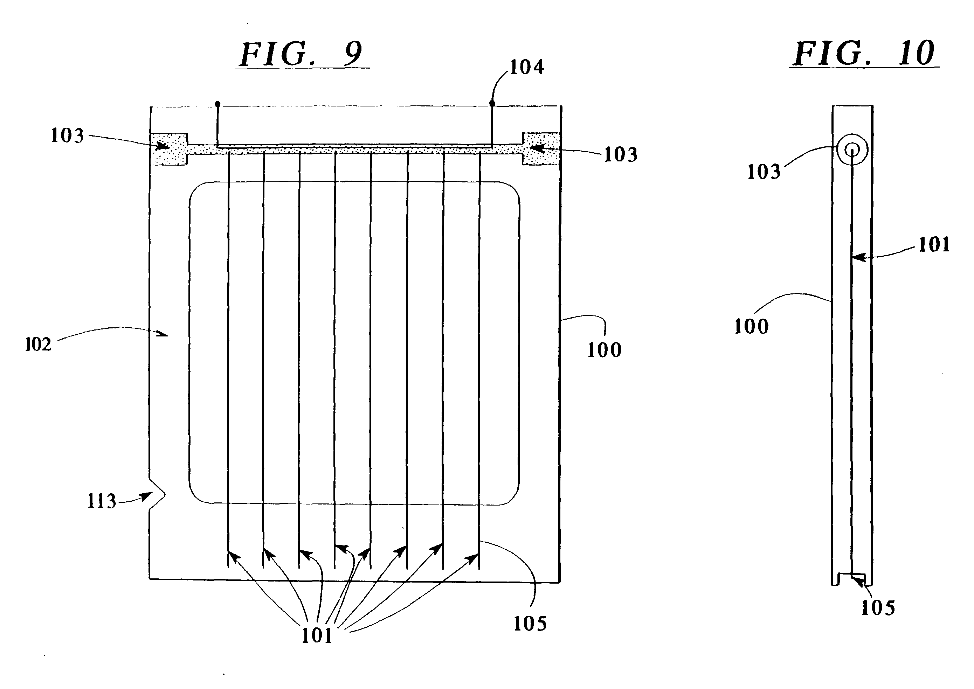

Figure 9 shows the electrophoresis separation plate 100 having 8 capillaries 101 mounted on a frame 102; upper buffer reservoir 103 provides buffer to the capillaries 101. Orientation notch 113 provides a means for aligning the separation plate for transferring sample or reading columns. Electrode 104 and an electrode at the injection end of each of the separation capillary 105 provide for electrical communication through the buffer. Figure 10 is a cross-sectional view through a separation plate.

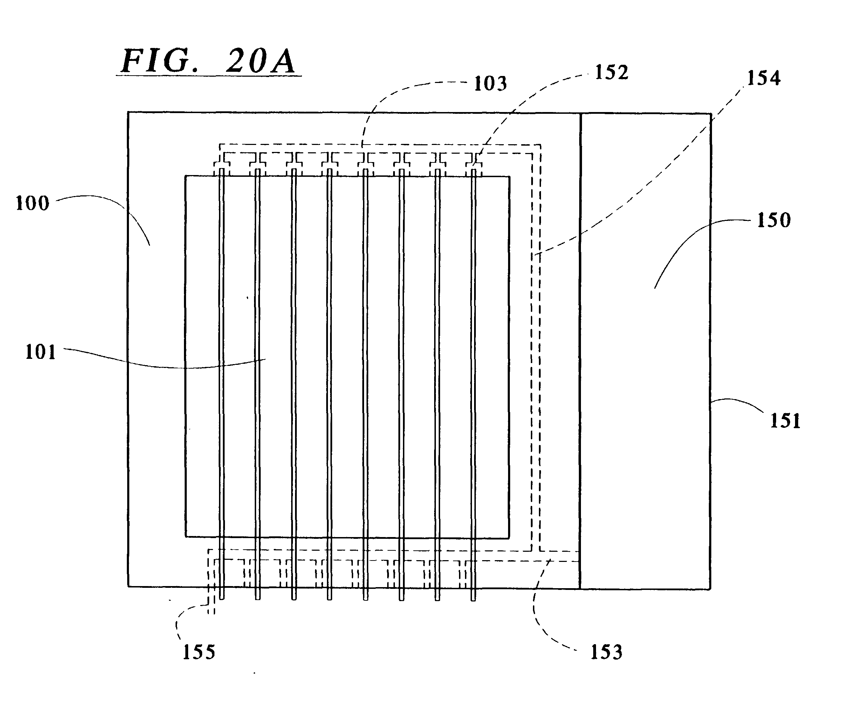

As shown, separation plate 100 contains buffer in upper reservoir 103; the buffer in 103 is drawn from a source external to separation plate 100. In a preferred embodiment as shown in Figure 20a, separation plate 100 may also be equipped with an integral (or dedicated) supply of buffer 150 on-board the separation plate in a storage vessel 151 (or tank) attached to separation plate 100. A portion of the buffer in this integral supply 151 can be used to flush the upper buffer wells 152 and the capillaries 101 after each analysis via a set of manifolds 154 in the separation plate. Another manifold 153 is employed to deliver buffer via nozzles 155 to run buffer well 91 on the sample handling plate.

In this way, separation plate 100 becomes a self-contained, limited-use, application-specific device. Sufficient buffer of the appropriate composition for a predetermined number of uses can be packaged with the separation plate for user convenience. The appropriate buffer can be packaged with the separation plate of capillaries to preclude use of the wrong buffer composition with a specific set of capillaries. Finally, application-specific separation plates can be developed, where the capillary and buffer chemistry are optimized for separation of a particular set of analytes, thereby insuring optimum separation performance from the system.

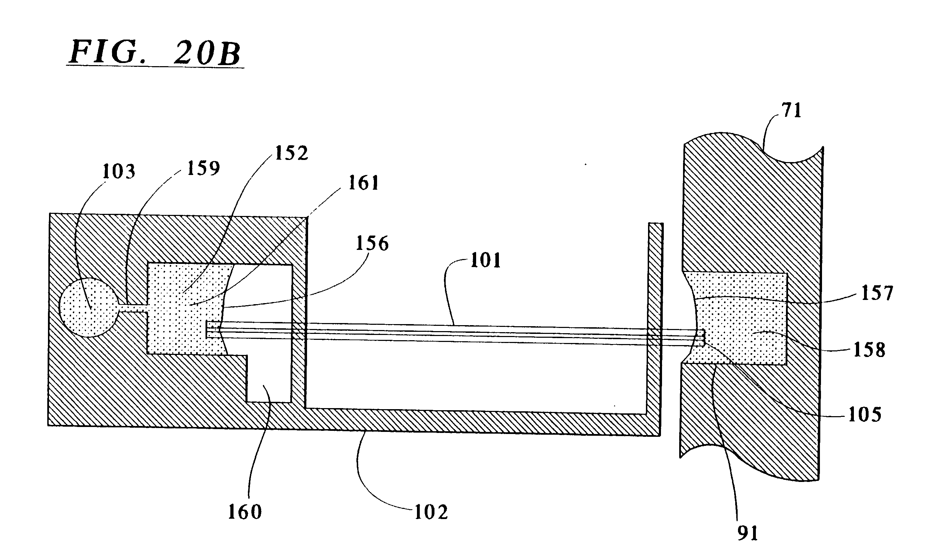

Figure 20b shows the separation plate 100 and sample handling plate 71 in cross-section and illustrates important features of the buffer well geometries of the separation plate 100 and sample handling plate 71. Buffer is delivered to upper buffer well 152 via manifold 103. Separating upper buffer well 152 and manifold 103 is an orifice 159 which controls the flow of buffer into the upper buffer well. Buffer 161 partially fills upper buffer well 152, forming a meniscus 156 at one end of the buffer well. An overflow basin 160 catches buffer that might flow from upper buffer reservoir 152 and returns expended buffer from 152 to a waste reservoir. One end of the separation capillary 101 is immersed in the buffer in upper buffer well 152. The other end of the separation capillary 101 is immersed in sample handling plate buffer well 91 which is situated on sample handling plate 71. Likewise, sample handling plate buffer well 91 is filled with buffer 158 which forms a meniscus 157. Buffers 161 and 158 are identical in chemical composition since they were both delivered from buffer supply 150 in buffer tank 151. Ideally, upper buffer well 152 and sample handling plate well 91 have identical cross-sectional geometries and comparable if not identical well surface properties, such that buffer 161 wets upper buffer well 152 and buffer 158 wets sample handling plate well 91 to the same extent and forms the same curvature of meniscus in each. In this way, the volumes of buffer fluid in each buffer well experience identical forces and thus the tendency for buffer fluid to flow through the capillary to balance any imbalances in these forces is eliminated. Imbalances in the forces experienced by the buffers in the two wells could result from different wetting properties of the two well structures as evidenced by different contact angles for the buffer in the two wells and this would manifest itself in different curvatures of the meniscus in the two wells. Likewise the geometry of the upper buffer well 152 and the sample handling plate well 91 should ideally be identical. Also, as shown, upper buffer well 152 and sample handling plate buffer well 91 are designed to permit removal or addition of some fraction of the buffer from the wells by electroosmotic flow during the separation process without a change in the height of buffer fluid in either well. The absence of this change in fluid level means that no hydrodynamic flow of buffer fluid will occur during the separation process; such hydrodynamic flow would result from syphoning induced by differences in fluid level and the presence of such flow could be detrimental to the separation process.

Those skilled in the arts will recognize that parts such as the sample handling plate, base plate and frame of the separation plate can be machined or molded from chemical resistant plastics such as polystyrene or the like.

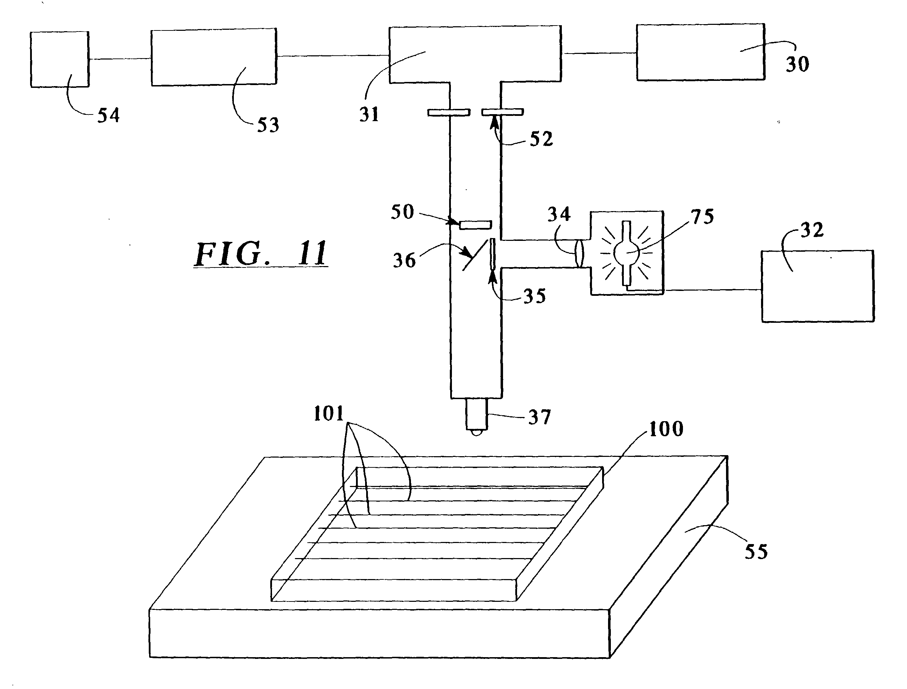

Thus, in operation, samples from an array of samples 85 such as a multiwell plate are wicked into an array of sipping capillaries 82 of the sample handling plate 71. The sample handling plate 71 is placed on base 72 and the sample is manipulated by pressurizing the chamber 69 defined by the sample handling and base plates and finally moved to the base plate wells 74 for presentation to the capillaries in the separation plate 100. However, prior to transferring the sample to the capillary, the capillaries are washed with buffer and primed with buffer. Samples are injected into the capillaries and electrophoresis is conducted in the capillaries in the separation plate. When the electrophoresis is finished, the separation plate may be moved to an analysis station. The over all scheme is shown in Figures 4a-c. After electrophoresis, the separation plate can be stored or read as shown in Figure 11.

An important feature of the present invention is the flexibility of the system to allow samples to be run simultaneously under a variety of separation conditions. This is possible because each of the separation plates in the array of separation plates as shown in Figure 4C is a self-contained unit and each plate can be filled with a different buffer and can be equipped with a different capillary chemistry. Thus, it is possible to form a stack of 12 different separation plates filled with 12 different separation buffers and to analyze a set of 8 different samples under 12 different sets of conditions using the format illustrated in Figure 4. This feature is useful for rapid screening of appropriate separation conditions when developing a separation method or when analyzing a set of samples for various subsets of components that are best separated under differing separation conditions.

Capillary electrophoresis columns can be analyzed in variety of ways including the methods shown in U.S. Patents 4,675,300, 4,274,240 and 5,324,401. The sample injection and separation are conducted in one location and the plate may be transported to a different location for analysis. Figure 11 shows a block diagram of one optical system for reading the capillaries. Power supply 30 energizes the photomultiplier tube 31. Power supply 32 energizes a 75 watt Xenon lamp 33. Light from the lamp 33 is condensed by focusing lens 34 which passes light to the excitation filter 35. A dichroic mirror 36 directs excitation light to microscope objective 37. The separation plate 100 with capillaries 101 is mounted on a rectilinear scanner to pass the capillaries over the light from the microscope objective 37. Fluorescent emission light is collected by objective 37, passed through a dichroic mirror 36, emission filter 50, spatial filter 52 before reaching photomultiplier (PMT) 31. The output signal of PMT 31 is fed to an analog-to-digital converter 53, which in turn is connected to computer 54.

Alternatively, a static detection system in which a stationary detection point some distance from the injection end of the capillary is monitored as analyte bands traverse the length of the capillary and pass by the detection zone could be used. This type of detection could be implemented using optical fibers and lenses to deliver the excitation radiation to the capillary and to collect the fluorescent emission radiation from the detection zone in the capillary. Appropriate multiplexing and demultiplexing protocols might be used to sequentially irradiate and monitor a large array of capillaries using a single source and a single or a small number of photodetectors. Using this approach, each capillary in the array is sequentially polled to detect any analyte band in the detection zone of that capillary.

Those skilled in this art will recognize that the above liquid handling system provides for simultaneous and quantitative sampling of a large array of samples by sipping from the 96, 192 or 384-well plates or arrays of microtubes with an array of sipper capillaries. It provides for mixing separate aliquots in the µl range by cycling the aliquots back and forth through a porous matrix such as a membrane. The invention provides an array of addition and mixing sites for the simultaneous addition and mixing of reagents for achieving either a constant or a gradient of mixed material across the array and for precisely controlling for the simultaneous starting or stopping of reactions.

Use of activated membranes in the base plate provides for selective removal of some components of the sample of reaction mixture prior to injection. For example, an ultrafiltration membrane may be used for the removal of high molecular weight constituents or an affinity membrane, (e.g., protein-A membranes) for the removal of IgG or lectin-membranes for removal of carbohydrates or membranes with a specific antibody directed against biopharmaceutical product to remove the great excess of product for impurity analysis for process and quality control.

### EXAMPLE I

This example illustrates separation and detection of *Msp 1* pBR322 fragments under the following conditions:

| | |
|---|---|
| SEPARATOR BREADBOARD: | SEPARATION PLATE AS SHOWN IN FIG. 9. |
| CAPILLARIES | |
| TYPE: | 30 MICRON ID FUSED SILICA DERIVATIZED WITH 3.5% LINEAR POLYACRYLAMIDE. |
| LENGTH: | 109MM |
| WINDOW LOCATION: | 10-100 MM; BARE SILICA |
| CLEANING PROCEDURE | FLUSHED WITH WATER, THEN BUFFER |
| | |
| SAMPLES: | *Msp 1* pBR322 DNA 5 uG/ML IN 0.5 X TBE LOADED 5 IN CYLINDRICAL TEFZEL™ WELL FOR INJECTION |
| | |
| DETECTOR: | NIKON EPI-FLUORESCENCE MICROSCOPE PTI ANALOGUE PM SYSTEM |
| GAIN: | 0.01 µA/VOLT |
| TIME CONSTANT: | 50 MSEC |
| PMT VOLTAGE: | 1000V |
| LAMP | XENON |
| IRIS: | Open |
| N.D. FILTERS: | None |
| FILTER SET: | G2A CUBE (ETBR): (Dich 580 nm, Exc 510-560 nm, Em 590 nm) |
| FOCUS & SLITS: | focus on inner bore, set slits +25 µm on either side of bore diameter |
| DETECTOR POSITION: | 45 mm scan of capillary along x axis using detection system illustrated in Figure 11. |
| OBJECTIVE: | 10X |
| DATA SYSTEM: | PE NELSON MODEL 1020 |
| DATA COLL. RATE: | 20-40 HZ |
| BUFFERS | |
| SAMPLE: | 0.5 X TE |
| CAPILLARY (pre load): | STOCK NUCLEOPHOR™ BUFFER + 2.5 µg/mL ethidium bromide |
| END CHAMBERS: | At ground: ethidium bromide sieving buffer, not plugged (vented to atm pres.); at Sample end: 2.5 ug/ml ethidium bromide in TBE electrolyte |
| INJECTION | |
| METHOD: | Electrokinetic, capillary cassette in horizontal position |
| TIME: | 10 sec |
| VOLTAGE: | 3.33kV |
| SAMPLE REMOVAL: | Removed Tefzel™ cylindrical well; flushed well; refilled with buffer |
| SEPARATION RUN | |
| VOLTAGE: | 3.33 kV; run for ∼90 sec; capillary cassette in horizontal position |
| CURRENT: | 1.8 µA measured by hand-held multimeter |
| POLARITY: | Negative at injection end; detector near ground. |
| BUFFER: | Std Nucleophor™ buffer + 2.5 µg/ml EtBr |
| | |
| DETECTION: | Auto scan from x = 190000 to x = 26000 via Cell Robotics Smartstage™; Capillary in focus +/-5 microns across scanned length. Focus also intentionally misadjusted 1/2, 1, and 2 turns for scan at 500 µm/sec. scans. |

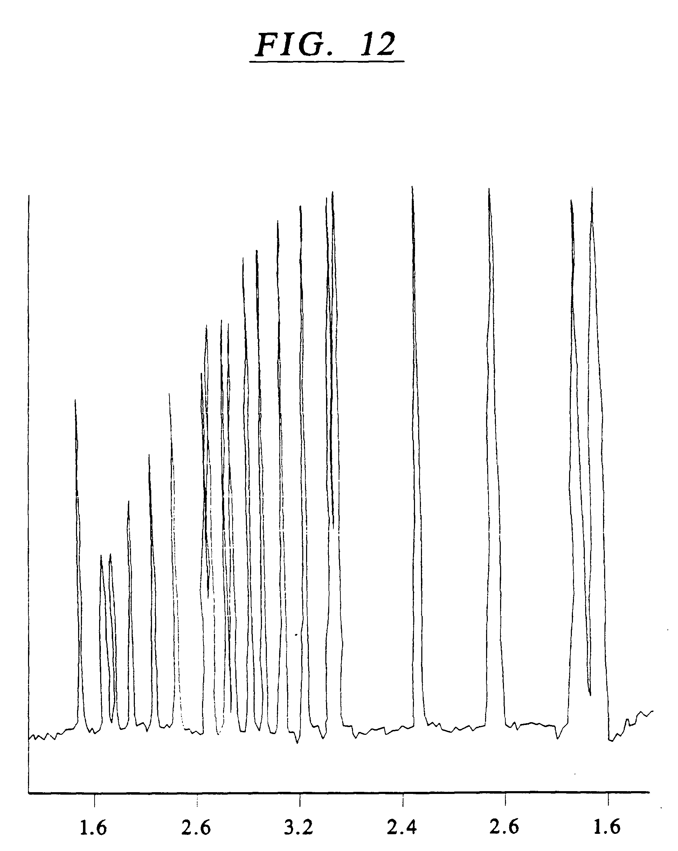

Figure 12 illustrates separation of the DNA fragments.

### EXAMPLE 2

This example illustrates the separation of a series of single-stranded oligonucleotides that differ by the addition of a single base to the previous oligo. The sample consists of a pdA₁₀ fragment which was labeled with a fluorophore (FAM) on the 5' end. The 5'FAM-pdA₁₀ fragments were then enzymatically extended with terminal transferase by addition of dATP onto the 3' end of the fragments. This process gave a Gaussian distribution of 5'FAM-pdAₓ fragments, with X ranging from ∼ 20 to 75. Separation of this sample mimics a DNA sequencing separation in that single-stranded DNA fragments that differ by 1 base are separated and detected by fluorescence detection.

| | |
|---|---|
| Capillary | 10 cm length 100 µm id window at 7.5 cm, internally coated with linear polyacrylamide, positioned in separation plate illustrated in Figure 1. |
| | |
| Buffer | Solution of 10% ^{w}/ᵥ linear polyacrylamide in 1X TBE (89 mM Tris, 89 mM borate, 2mM EDTA) plus 7M urea loaded into the capillary via syringe. |
| | |
| Anode/Cathode Reservoir Buffer | 1X TBE, 7M urea |
| | |
| Injection | 10 second at 2 kV electroinjection at cathode end. |
| | |
| Separation | 2 kV (∼ 12 µA current) const. potential |
| | |
| Sample | 50 nM total DNA; average of 1 nM each fragment |
| | |
| Detection | Static; fluorescence; 470 - 490 nm excitation > 520 nm emission using detection scheme illustrated in Figure 11, but with static detection. |
| Slit | 110 µm x 20 µm, positioned 7.5 cm from injection end. |

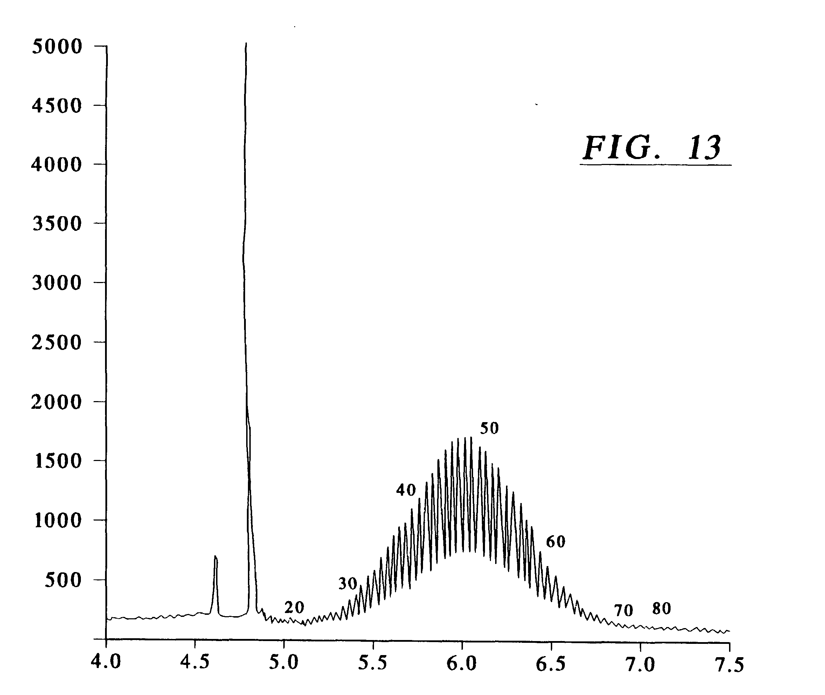

The results are shown in Figure 13.

### EXAMPLE 3

This example illustrates the separation of some non-standard samples of DNA. The samples were obtained by amplification of human genomic DNA samples via the PCR™ (polymerase chain reaction) process. Samples were not purified prior to use. Samples were diluted with a predetermined concentration of a calibration standard which contained PCR™ fragments of known sizes of 50, 100, 200, 300, 400, 500 ... 1000 bp. The calibration standards were obtained from BioSynthesis, Inc., Louisville, TX. Samples were diluted by 25% into the calibration standard and separated under the following conditions:

| | |
|---|---|
| Capillary | 9.2 cm length 30µm id 4% linear polyacrylamide coated, window at 7.0 cm from cathode end, positioned in an electrophoresis illustrated in Figure 1. |
| | |
| Buffer | Nucleophor® sieving buffer. (Dionex Corp., Sunnyvale, CA) + 2.5 µg/mL ethidium bromide; loaded into capillary via syringe. |
| | |
| Cathode Buffer | 1X TBE (89 mM Tris, 89 mM borate, 2 mM EDTA) + 2.5 µg/mL ethidium bromide. |
| | |
| Injection | 10 sec. at 3 kV electroinjection at cathode. |
| | |
| Separation | 3 kV constant potential. |
| | |
| Detection | Excitation - 510-560 nm. Emission - > 590 nm, using the static detection scheme illustrated in Figure 11. |

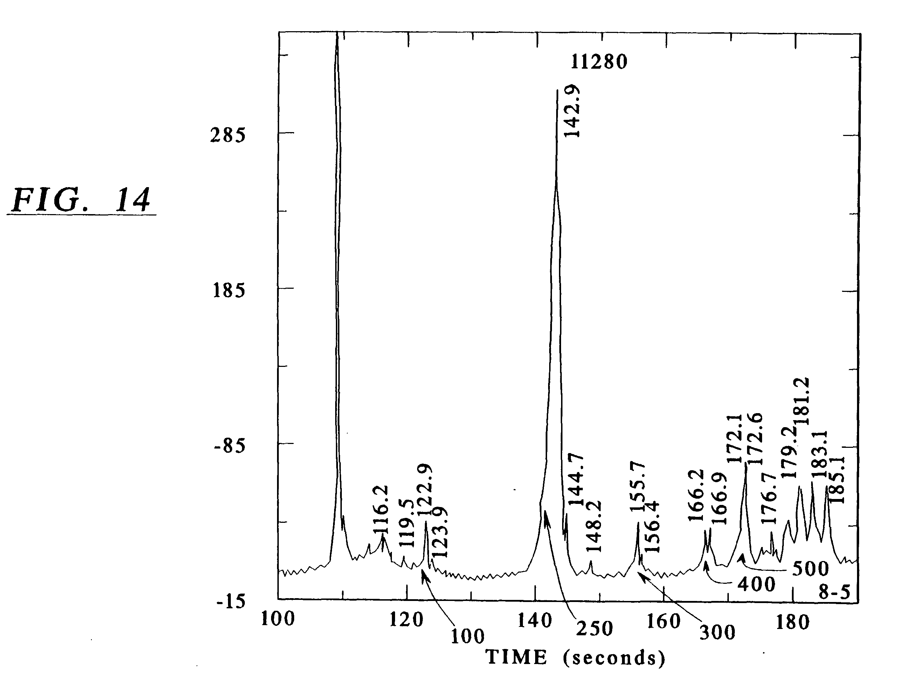

The expected size of this DNA sample was 211 bp. The size as determined from the separation shown in Figure 14 was 210 bp.

### EXAMPLE 4

### DNA Sequencing

A 96 multi-well plate with templates 1-8 to be sequenced placed in all rows of respective lanes. Primers 1-8 are in all rows of respective lanes, and all 4 bases are in all 96 positions.

The above array is sipped into the Base Plate. For sequencing, it is desirable to simultaneously sip four samples and mix those samples prior to sequencing. For example, with reactions involving four separate reactions with color coded primers, place base Plate with cover into instrument station which can control pressure within the Base Plate, control temperature, and automatically add reagents to the top of the Base Plate at the various positions.

Simultaneously add the polymerase to all 96 positions and start the pressure/vacuum cycling to mix at the membranes and to start the chain extension reaction.

With an eight-by pipetter, add fluorescently labeled, chain extension terminators (for all 4 bases, color coded), to all 8 positions of the first row. Chain extension ends in these positions, producing fragments extending from 10 (allowing for the primer) to 120 bases, for all 8 templates.

After a predetermined period of time (matched to the polymerization rate, controlled by buffer conditions), the same terminator mix is added to the second row of eight lanes. Chain extension ends in the second row, producing fragments extending from 80 to 220 bases from the starting point, for all 8 templates. The stagger and overlap of fragment sizes is determined by the time interval between terminator additions, the concentration of polymerase and bases, and the buffer conditions. The stagger of fragments may be obtained by changing the relative concentration of terminators versus bases at the various rows, or by starting all polymerization reactions simultaneously and adding an enzyme-stopper at various time points).

Additions of terminators, at predetermined time intervals is continued for all rows.

The double stranded DNA is melted and injected and then separated on the respective capillaries.

Each separation plate (at a given row) will have on-board sieving buffer optimized for the fragment size range for that row which is nominally a range of about 100 bases. Therefore reducing the relative size resolution required to obtain single base separation.

At the end of the entire process, one has simultaneously sequenced 8 templates, each for about 1200 bases, in about 30 minutes. Those skilled in this also know how to re-prime and continue the process.

The methods and apparatus of this invention have many advantages for DNA sequencing. The primary advantages of this sequencing method is that one obtains long read lengths by combining continuous (or overlapping) read windows. Hence, within each row of 8 capillaries, one needs single base resolution for a defined read window (e.g. from 490 to 610 bases). Therefore, the sieving buffer for each row of 8 capillaries, on a given electrophoresis plate, can be optimized for the particular read window.

Additional advantages are that the sequencing throughput is increased by 3 to 10 fold over current methods and that small volumes of template and reagents are required. The main reason for the higher throughput is that separation and reading is done simultaneously for a large number of short capillaries.

Finally, though this sequencing method is ideally suited to the devices of this invention, those experienced in the art of sequencing will realize that this method may be practiced on other devices such as standard gel-based DNA separation systems.

### EXAMPLE 5

### Method for Protein Binding Assay of Enkephalin Analogs

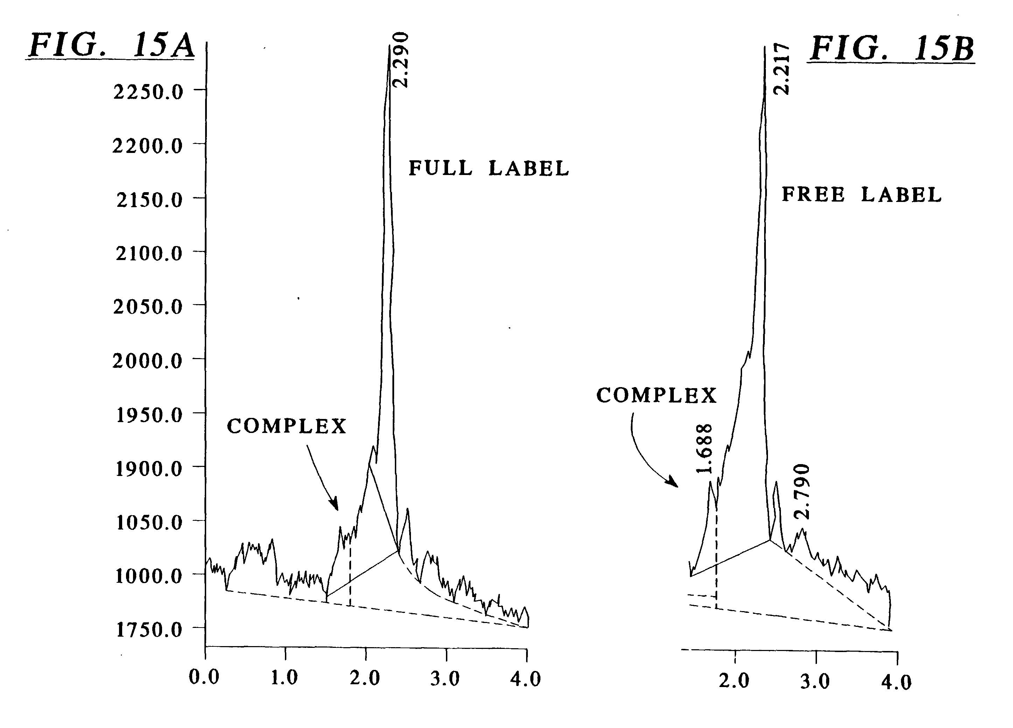

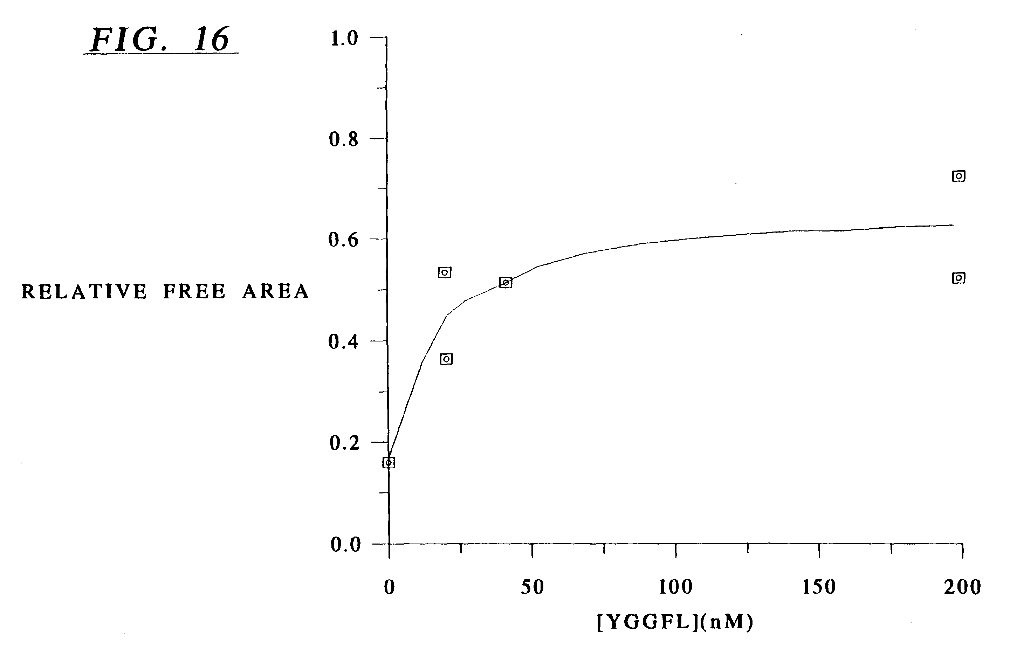

Capillary: 31 µm ID fused silica, 10 cm mounted in a separation plate shown in Figure 1. Wash at beginning and end of day with phosphate buffer and water (5 min).
Materials: Run buffer was 62.5 mM sodium phosphate, pH 8.5 with 0.01% (BSA) bovine serums albumin. Label (F-11, YGGFLTSEK(-fluorescein)SQ (TANA Labs, Houston, TX), competitor (YGGFLK - American Peptide Co., Sunnyvale, CA) and F_{ab'} monoclonal antibody fragment (Gramsch Labs Schwabhausen Germany) were diluted in Run Buffer. Antibody and label were mixed at a concentration of 12.5 nM each; this typically added to competitor within 5 minutes after mixing. Competitor was diluted to several concentrations. Add 40 µl of Ab/label mixture to 10 µl of competitor and incubated 10 minutes before assaying. Mix by pumping action of pipet. These mixtures were stable for several hours at room temperature, if protected from evaporation and were held in the dark. Final concentrations were: 10 nM F_{ab'}, 10 nM F-11, and 0, 20, 40 or 200 nM for the competitor.
Injection: The injection area of the separation plate was rinsed with about 1 ml run buffer and all liquid removed. Using a micropipet, 4 µl of sample was delivered to the area between the capillary end and (sample well) the electrode. Sample was introduced into the capillary via electrokinetic injection for 10 seconds at 2.3 kV at the anode, at the end of which the injection area was flushed with 4 drops of run buffer to remove residual sample.
Separation: Voltage was set at 3 kV.
Detection: Laser light source; PMT; gain set at 10⁻¹, 500 msec; detector window at 6 cm from injection. Argon ion laser, 488 nm excitation. Fluorescein was detected with a long pass filter above 520 nm.
Analysis: Two areas in the fluorescent electropherogram measured as shown in Figure 15.
   - Area 1 -: under the free label peak.
   - Area 2 -: total fluorescence area, including the complex, free label, and fluorescence between the two peaks due to label coming off the Ab during migration.
   - Area 1/Area 2: is plotted vs. [competitor] as shown in Figure 16.

### EXAMPLE 6

| **Procedure for DNA Detection Limit** | |
|---|---|
| Breadboard | |
| | |
| Capillary | 10.1 cm of 30 µm id fused silica, covalently coated with polymeric layer of polyacrylamide; window at 6.6 cm from cathrode end, and positioned in a separation plate as illustrated in Figure 1. |
| | |
| Anode/Capillary Buffer | Nucleophor™ sieving buffer (Dionex, Sunnyvale, CA) plus 2.5 µg/ml ethidium bromide. |
| | |
| Cathode buffer | 1X TBE (89.5 mM Tris, 89.5 mM borate, 2.0 mM EDTA, pH 8.3) plus 2.5 µg/ml ethidium bromide. |
| | |
| Detector | as illustrated in Figure 13, run in the static detection mode. excitation 510-560 nm emission > 590 nm |
| | |
| Injection Run | 30 sec at 3.0 kV @ cathode 3.0 kV constant voltage |
| | |
| Sample | 0.033 µg/ml *HaeIII* digest of øX 174 DNA (Sigma Chemical Co., St. Louis, MO) in water |

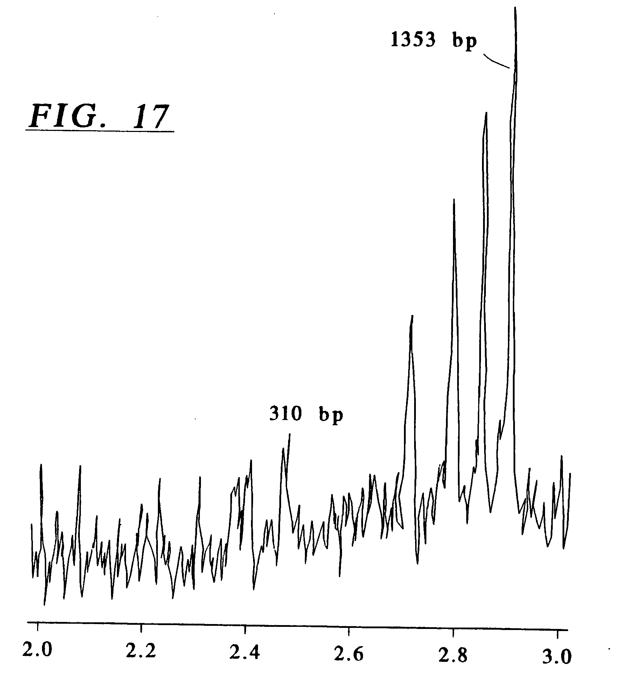

Figure 17 shows that 12 picogram or 14 attomoles of 1353 bp DNA can be detected and that 2-3 picograms or 14 attomoles of 310 bp DNA can be detected.

### EXAMPLE 7

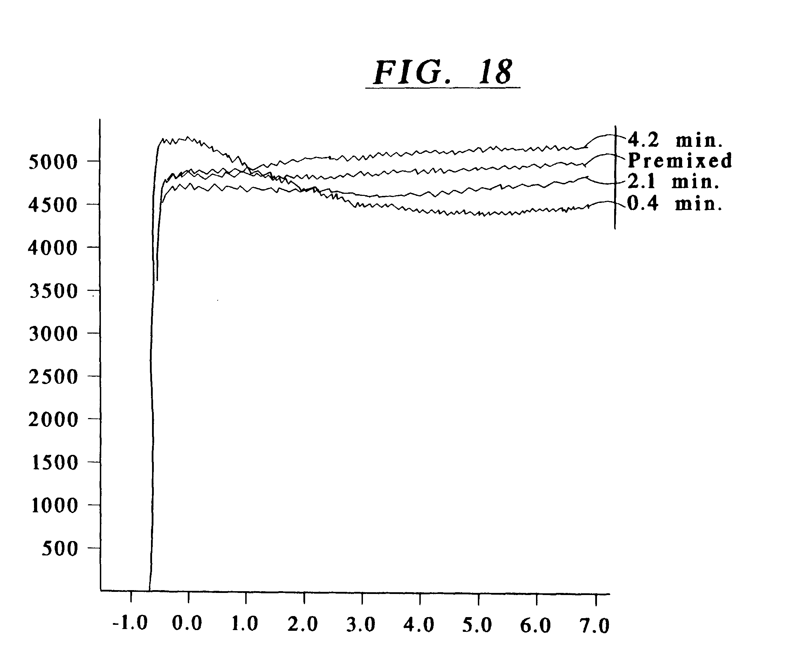

Figure 18 illustrates the efficiency of mixing very small volumes of reagents as described in Figures 7a-e. Thus, 1.9 µl of a dye (xylene cyanol) was mixed with 1.9 µl of water and the mixed sample was passed back and forth through the membrane 80 for 0.4, 2.1 or 4.2 minutes.

### EXAMPLE 8

This example demonstrates a combined sample sipping, sample presentation, sample injection, separation, and scanning detection of separated sample components.

| Sipper/Mixer | |
|---|---|
| Sipper | 2.5 cm lengths of 538 micron id fused silica capillary in a polycarbonate plate |
| | |
| Mixing Block | 764 micron x 16 mm PEEK channels in polycarbonate block |
| | |
| Top Plate | polycarbonate |
| | |
| Membrane | 0.45 Micron pore membrane |
| | |
| Volume Speed | 7.30 microliters from array of PCR™ tubes, each with 30 |
| | microliters sample |

| Separator | |
|---|---|
| Breadboard | six channels with 6 palladium wire electrodes at injection end |
| Capillaries | |
| | Type: 100 micron id fused silica derivatized with 4% linear polyacrylamide coating Length: 109 mm Window Location: 90 mm Total: +/- 45 mm from center point of capillaries Cleaning Procedure: Flushed with water, then sieving buffer solution from syringe |
| | |
| Samples | *HaeIII* digest of øX174 DNA from Sigma Chemical Co. 10 microgram/mL in 0.5% TE buffer. 30 microliters of sample were loaded into each of 6 500 mL tubes as primary sample array |
| | |

| Detector | |
|---|---|
| Optical | |
| Lamp | 75 watt Xenon |
| Iris | 1/8 opened |
| N.D. Filters | ND1 and ND2 out |
| Gain | 0.1 microamp/volt |
| Time Constant | 50 Milliseconds |
| PMT Voltage | 850 Volts |
| Filter Set | G2A cube (ETBR):(Dichroic 580 nm, Exc. 510-560 nm, EM. 590 nm) |
| Focus & Slits | Focus on inner bore of capillary; Slits 150 x 20 microns centered over inner bore |
| Objective | 10x |
| Scanner | Cell Robotics Smartstage™ scanner |
| Scan Speed | 1760 Microns/Sec |
| X Scan Range | X =.33000 to X =.36000 microns |

| Buffers | |
|---|---|
| Sample | 0.5X TE (5 mM TRIS, pH 7.5, 1 mM EDTA) |
| Capillary | Stock Nucleophor™ buffer (Dionex Corporation) + 2.5 microgram/mL ethidium bromide |
| | |

| Common | |
|---|---|
| Reservoir | Stock Nucleophor™ buffer (Dionex Corporation) + 2.5 microgram/mL ethidium bromide |
| Array Reservoirs | 1 x TBE (89.5 mM tris base; 89.5 mM boric acid, 2 mM EDTA, pH 8.3) + 2.5 microgram/mL ethidium bromide |
| Power Supply | Bertan, modified with timer/controller |
| Polarity | Negative |
| | |

| Injection | |
|---|---|
| Method | Electrokinetic, from sampling plate on horizontal |
| Duration | 15 seconds |
| Voltage | 3.3 kV |
| Sample Removal | Moved electrophoresis plate to transfer capillaries from sample wells to run buffer wells |
| | |

| Separation Run | |
|---|---|
| Voltage | 3.3 kV |
| Duration | 120 seconds |
| Current | 156 microamps total for the 6 capillaries |
| Detection | sequential scan of the 6 individual capillaries at 1770 microns per second |
| | |
| Data System | PE/Nelson Model 1020 |
| Input | 10 Volts fulls scale |
| Sampling Rate | 20 Hertz |

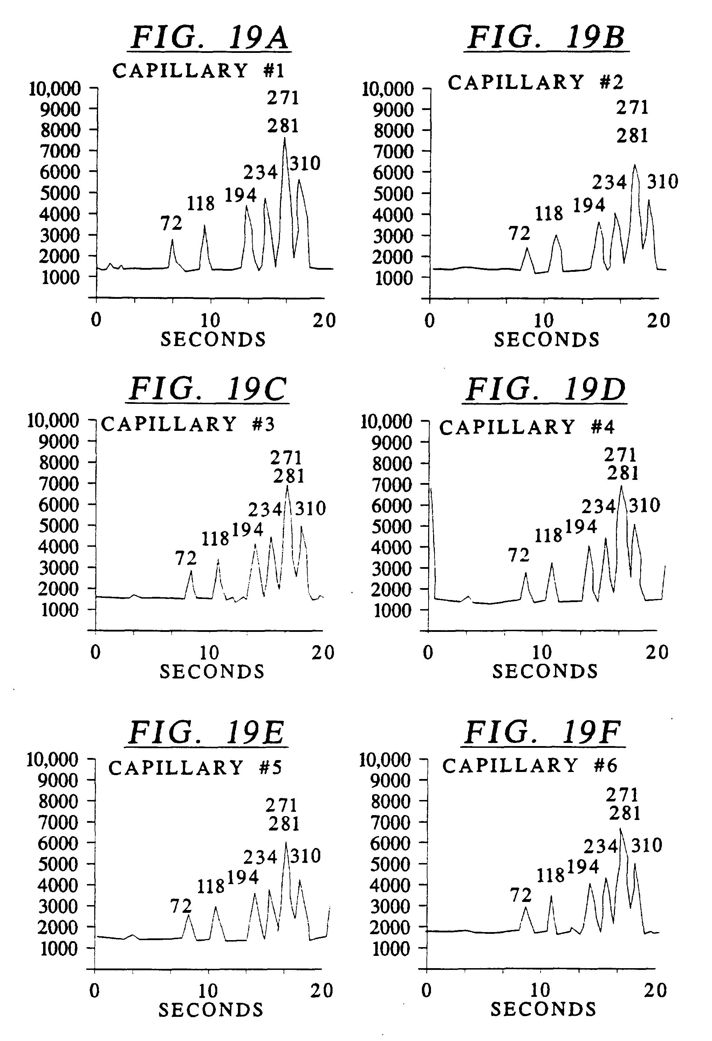

Thus, simultaneously sipping an array of six samples, simultaneously presenting the samples through the sample handling block, simultaneously electroinjecting the presented samples into the capillaries, simultaneously conducting the electrophoresis following by analysis is demonstrated. Figure 19 illustrates the separation and reproduceability of separation of the system for DNA sequences having a size between 72 and 310 base pairs.

The above examples are intended to illustrate the present invention and not to limit it in spirit and scope.

## Claims

1. A separation plate (100) comprising:
a) a frame (102) having first and second ends and having an array of separation capillaries (101) with first and second ends mounted in the frame;
b) the first end of the frame having at least one common buffer reservoir (103) and at least one electrode (104) in the common buffer reservoir (103), wherein the first ends of the capillaries are in liquid communication with the common buffer reservoir(103); and
c) the second end of the frame (102) having means for placing the second ends of the capillaries in contact with an array of sample sites (85) or run buffer sites which are each in contact with an electrode (105), and wherein there is liquid communication between the common buffer reservoir (103) at the first end of the frame and the array of sample sites (85) or the run buffer sites at the second end of the frame (102) through the separation capillaries (101) and there is electrical communication between the electrode (104) in the common buffer reservoir (103) at the first end of the frame and each electrode (105) in the array of sample sites (85) or run buffer sites at the second end of the frame by way of the separation capillaries (101).

2. The separation plate (100) of claim 1, wherein the plate contains 8, 12, 16 or 24 separation capillaries spaced apart to match the spacing format in a row or column of 8, 12, 16 or 24 wells in a 96, 192 or 384 multi-well plate.

3. The separation plate (100) of claim 1, wherein each electrode (105) is mounted in the frame (102) near the second end of the capillaries (101) so that when the second end of the capillaries are in the sample sites (85) or in the run buffer sites at the second end of the frame (102) there is electrical communication between the electrode (104) in the buffer reservoir (103) and each electrode (105) near the second end of the capillaries (101).

4. The separation plate (100) of claim 1, wherein the electrodes (104) in the buffer reservoir (103) at the first end of the separation plate (100) and each electrode (105) in the sample sites or run buffer sites at the second end of the separation plate (100) are plated or coated onto the exterior of the separation capillaries (101).

5. The separation plate (100) of claim 1 further comprising a buffer-filled storage vessel (151) supplying run buffer (150) for replenishing the buffer reservoir (103) at the first end of the separation plate (100), for flushing and refilling the capillaries (101) and for supplying run buffer (150) to the second end of the capillaries (101) in the separation plate (100).

6. An apparatus for processing an array of samples (85) containing two or more components in an array of sample containers comprising:
a) a sample handling plate (71) which defines an array of sample handling plate wells (74) and an array of sipper capillaries (82) having an inner wall, an outer wall, a distal end, a proximal end, an inner bore diameter and an outer bore diameter, wherein each well of the sample handling plate (71) is in liquid communication with at least one sipper capillary (82) and wherein a porous matrix (80) is interposed between each sipper capillary (82) and the corresponding sample handling plate well (74), and wherein the array of sipper capillaries (82) will simultaneously fill with sample by capillary action from the array of sample containers;
b) a base plate (72) which defines an opening to receive the sample handling plate (71) and which defines an inner chamber with means associated with the base plate (72) and the sample handling plate (71) to seal the inner chamber (69) and to provide a sealed inner chamber; and
c) means for pressurizing and evacuating the sealed inner chamber (69) to move liquid on either side of the porous matrix (80) to the other side of the porous matrix.

7. The apparatus of claim 6 wherein the sipper capillaries (82) of the sample handling plate (71) are in an array which conforms to the spacing format of a 96, 192 or 384 multi-well plate.

8. The apparatus of claim 6, wherein the wells (74) of the sample handling plate (71) conform to the spacing format of a 96, 192 or 384 multi-well plate.

9. The apparatus of claim 6 wherein the means for pressurizing and evacuating is programmed to alternately pressurize and evacuate the sealed inner chamber (69) to mix fluids above the porous matrix (80) with sample (85) below the porous matrix.

10. The apparatus of claim 6 wherein there is provided at least one run buffer well adjacent to the sample handling plate wells (74).

11. The apparatus of claim 6 wherein the porous matrix (80) is a membrane.

12. The apparatus of claim 6 wherein the porous matrix (80) is a bed of sintered polymeric particles.

13. The apparatus of claim 6, wherein the porous matrix (80) contains a specific binding agent which removes at least one component from the sample.

14. The apparatus of claim 6, wherein the porous matrix (80) is a filtration membrane which removes insoluble material from the sample.

15. The apparatus of claim 6, wherein the porous matrix (80) is an ultrafiltration membrane which passes low molecular weight components membrane and retains high molecular weight components.

16. The apparatus of claim 6, wherein each sipper capillary (82) has a stop junction (183) on the inner wall of the sipper, said stop junction being situated a defined distance from the proximal end of the sipper capillary (82), said stop junction (183) being formed by an abrupt increase of the inner bore diameter of the sipper capillary (82), and the distance from the proximal end of the sipper capillary (82) to the stop junction (183) effectively defining the length of the sipper capillary (82) that can be filled with sample (85) by capillary action when the proximal end of the sipper capillary (82) is immersed in the sample (85).

17. The apparatus of claim 6, wherein each sipper capillary (82) has a stop junction (183) on the inner wall of the sipper, said stop junction (183) being situated a defined distance from the proximal end of the sipper capillary (82), said stop junction (183) being formed by an abrupt change in the wetting properties of the inner bore diameter of the sipper capillary (82); and the distance from the proximal end of the sipper capillary (82) to the stop junction (183) effectively defining the length of the sipper capillary (82) that can be filled with sample (85) by capillary action when the proximal end of the sipper capillary (82) is immersed in the sample (85).

18. The apparatus of claim 6, wherein the sipper capillaries (82) are made of plastic with , inner walls sufficiently hydrophilic to exhibit capillary action.

19. The apparatus of claim 6 wherein the means for moving liquid is by electrokinetic injection.

20. The apparatus of claim 18, wherein a portion of the inner walls of the sipper capillary (82) are coated with a surfactant.

21. The apparatus of claim 18, wherein a hydrophilic polymer is grafted onto a portion of the inner walls of the sipper capillary (82).

22. The apparatus of claim 18, wherein a portion of the inner walls of the sipper capillaries (82) is subjected to a plasma etch treatment.

23. A separation plate (1) comprising:
a) a frame having a common buffer reservoir (3) at one end and a plurality of sample sites (2) at the other end and having an electrode (5, 7) at each end, wherein a cell electrode (6) is disposed in each of the sample sites (2) and connected to electrode (5) placed at the end of the frame close to said sample sites (2); and
b) a means for mounting separation capillaries (8) on the frame so that there is electrical communication between the electrodes (5, 7) and fluid communication between the sample sites (2) and the common buffer reservoir (3) when there is fluid in the sample sites (2), the separation capillaries (8), and the common buffer reservoir (3).

24. A system for analysis of an array of samples (85) in an array of sample containers comprising:
a) means for simultaneously transferring at least a portion of each sample (85) in the array of sample containers to a corresponding array of separation capillaries (101), wherein the separation capillaries (101) are in the separation plate (100) of claim 1;
b) means for simultaneously conducting electrokinetic separations on the array of transferred samples (85) in the separation capillaries (101); and
c) means for analysing the separations from (b).

25. The system of claim 24, wherein the array of samples (85) conforms to the spacing format of a 96, 192 or 384 multi-well plate.

26. An assembly of the separation plates (100), consisting of at least two separation plates (100) of claim 1 in which the separation capillaries (8) are arranged to conform to both the row and column spacing format of a 96, 192 or 384 multi-well plate.

27. The assembly of claim 26, wherein at least one different run buffer is used in at least one buffer reservoir (103).

28. A method for analysis of an array of samples (85) in an array of sample containers comprising:
a) providing an array of samples (85) in an array of sample containers;
b) simultaneously transferring at least a portion of each sample (85) in the array of sample containers to a corresponding array of separation capillaries (101) wherein the separation capillaries (101) are in the separation plate of claim 1;
c) simultaneously conducting electrokinetic separation of the transferred samples; and
d) analysing the separations of (c).

29. The method of claim 28, wherein the array of samples (85) is nucleic acids of varying length.

30. The method of claim 28, wherein the array of samples (85) is a specifically binding biomolecule, its binding partner or the complex of the two.

31. The method of claim 28, wherein the array of separation capillaries (101) is rinsed for reuse to separate additional samples.

32. The method of claim 28, wherein one or more fluids are added to the sample handling plate wells (74) and mixed with the samples.

33. A method for analysis of an array of samples (85) in an array of sample containers by capillary electrophoresis, said method comprising:
a) providing an array of samples (85) in an array of sample containers;
b) simultaneously transferring at least a portion of each sample in the array of sample containers to a corresponding array of capillary electrophoresis columns (101) using the apparatus of claim 6,
c) simultaneously conducting separation of the transferred samples by capillary electrophoresis, and
d) analysing the capillary electrophoresis separations of c).

34. The method of claim 33, wherein the array of samples (85) is nucleic acid of varying length.

35. The method of claim 33, wherein the array of samples (85) is a specifically binding protein, its binding partner or the complex of the two.

36. The method of claim 33, wherein one or more reagents are added to the sample containers and mixed with the samples.

37. A method for analysis of an array of samples (85) in an array of sample containers by capillary electrophoresis, said method comprising:
a) acquiring an array of aliquots of sample from an array of samples (85) in sample containers;
b) simultaneously processing the array of samples (85) to provide an array of processed samples and presenting the array of processed samples for capillary electrophoresis;
c) simultaneously transferring an array of processed samples to an array of capillary electrophoresis columns (101) using the apparatus of claim 6;
d) simultaneously conducting capillary electrophoresis on the array of the capillary electrophoresis columns (101) from c); and
e) analysing capillary electrophoresis columns (101) from d).

## Patentansprüche

1. Trennplatte (100) bestehend aus:
a) einem Gestell (102) mit erstem und zweitem Ende und einer Anordnung von Trennkapillaren (101) mit ersten und zweiten Enden, die in dem Gestell montiert sind;
b) wobei das erste Ende des Gestells mindestens ein gemeinsames Pufferreservoir (103) und mindestens eine Elektrode (104) in dem gemeinsamen Pufferreservoir (103) aufweist, wobei die ersten Enden der Kapillaren im Flüssigkeitskontakt mit dem gemeinsamen Pufferreservoir (103) stehen, und
c) das zweite Ende des Gestells (102) Mittel aufweist, um die zweiten Enden der Kapillaren in Kontakt mit einer Anordnung von Probenstellen (85) oder Laufpufferstellen anzuordnen, die ihrerseits alle in Kontakt mit einer Elektrode (105) stehen, und wobei ein durch die Trennkapillaren (101) hindurch verlaufender Flüssigkeitskontakt zwischen dem gemeinsamen Pufferreservoir (103) am ersten Ende des Gestells und der Anordnung von Probenstellen (85) oder Laufpufferstellen am zweiten Ende des Gestells (102) besteht und durch die Trennkapillaren (101) ein elektrischer Kontakt zwischen der Elektrode (104) in dem gemeinsamen Pufferreservoir (103) am ersten Ende des Gestells und jeder Elektrode (105) in der Anordnung von Probenstellen (85) oder Laufpufferstellen am zweiten Ende des Gestells besteht.

2. Trennplatte (100) nach Anspruch 1, wobei die Platte 8, 12, 16 oder 24 Trennkapillaren enthält, die so angeordnet sind, dass ihr Abstand dem Abstandsformat einer horizontalen oder vertikalen Reihe von 8, 12, 16 oder 24 Wells einer 96, 192 oder 382 Wells enthaltenden Multi-Well-Platte entspricht.

3. Trennplatte (100) nach Anspruch 1, wobei jede Elektrode (105) im Gestell (102) in der Nähe des zweiten Endes der Kapillaren (101) montiert ist, so dass zwischen der Elektrode (104) im Pufferreservoir (103) und jeder Elektrode (105) in der Nähe des zweiten Endes der Kapillaren (101) ein elektrischer Kontakt besteht, wenn das zweite Ende der Kapillaren sich in den Probenstellen (85) oder in den Laufpufferstellen am zweiten Ende des Gestells (102) befindet.

4. Trennplatte (100) nach Anspruch 1, wobei die Elektroden (104) im Pufferreservoir (103) am ersten Ende der Trennplatte (100) und jede Elektrode (105) in den Probenstellen oder in den Laufpufferstellen am zweiten Ende der Trennplatte (100) auf die Außenseite der Trennkapillaren (101) plattiert oder geschichtet.

5. Trennplatte (100) nach Anspruch 1, die weiterhin einen puffergefüllten Vorratsbehälter (151) umfasst, der Laufpuffer (150) zum Wiederauffüllen des Pufferreservoirs (103) am ersten Ende der Trennplatte (100), zur Spülung und Neufüllung der Kapillaren (101) und zum Bereitstellen von Laufpuffer (150) an das zweite Ende der Kapillaren (101) in der Trennplatte (100) bereitstellt.

6. Vorrichtung zur Verarbeitung einer Anordnung von Proben (85), die zwei oder mehr Bauteile in einer Anordnung von Probenbehältern enthält, umfassend:
a) eine Probenbearbeitungsplatte (71), die eine Anordnung von Probenbearbeitungsplatten-Wells (74) und eine Anordnung von Saugerkapillaren (82) mit einer Innenwand, einer Außenwand, einem distalen Ende, einem proximalen Ende, einem inneren Bohrungsdurchmesser und einem äußeren Bohrungsdurchmesser definiert, wobei jedes Well der Probenbearbeitungsplatte (71) sich in einem Flüssigkeitskontakt mit mindestens einer Saugerkapillare (82) befindet und wobei eine poröse Matrix (80) zwischen jeder Saugerkapillaren (82) und dem entsprechenden Well der Probenbearbeitungsplatte (74) angebracht ist und wobei die Anordnung von Saugerkapillaren (82) durch eine Kapillarwirkung aus der Anordnung von Probenbehältern gleichzeitig mit Probe befüllt wird;
b) eine Grundplatte (72), die eine Öffnung zur Aufnahme der Probenbearbeitungsplatte (71) definiert und die eine Innenkammer mit Mitteln definiert, die im Zusammenwirken mit der Grundplatte (72) und der Probenbearbeitungsplatte (71) die Innenkammer (69) abdichten und eine abgedichtete Innenkammer bereitstellen; und
c) Mittel zum Druckaufbau und zur Evakuierung der abgedichteten Innenkammer (69), um Flüssigkeit von einer beliebigen Seite der porösen Matrix (80) zur anderen Seite der porösen Matrix bewegen zu können.

7. Vorrichtung nach Anspruch 6, wobei die Saugerkapillaren (82) der Probenbearbeitungsplatte (71) sich in einer Anordnung befinden, die dem Abstandsformat einer 96, 192 oder 384 Wells enthaltenden Multiwellplatte entspricht.

8. Vorrichtung nach Anspruch 6, wobei die Wells (74) der Probenbearbeitungsplatte (71) dem Abstandsformat einer 96, 192 oder 384 Wells enthaltenden Multiwellplatte entsprechen.

9. Vorrichtung nach Anspruch 6, wobei die Mittel zum Druckaufbau und zur Evakuierung so programmiert ist, dass sie in der abgedichteten Innenkammer (69) abwechselnd einen Überdruck und einen Unterdruck aufbauen, um über der porösen Matrix (80) befindliche Flüssigkeiten mit der unter der porösen Matrix befindlichen Probe (85) zu mischen.

10. Vorrichtung nach Anspruch 6, wobei wenigstens ein an die Well der Probenbearbeitungsplatte (74) angrenzendes Laufpufferwell bereitgetsellt wird.

11. Vorrichtung nach Anspruch 6, wobei die poröse Matrix (80) eine Membran ist.

12. Vorrichtung nach Anspruch 6, wobei die poröse Matrix (80) ein Bett aus gesinterten Polymerteilchen ist.

13. Vorrichtung nach Anspruch 6, wobei die poröse Matrix (80) ein spezifisches Bindemittel enthält, das mindestens eine Komponente aus der Probe entfernt.

14. Vorrichtung nach Anspruch 6, wobei die poröse Matrix (80) eine Filtrationsmembran ist, die unlösliches Material aus der Probe entfernt.

15. Vorrichtung nach Anspruch 6, wobei die poröse Matrix (80) eine Ultrafiltrationsmembran ist, die für Komponenten mit niedrigem Molekulargewicht durchlässig ist und Komponenten mit hohem Molekulargewicht zurückhält.

16. Vorrichtung nach Anspruch 6, wobei jede Saugerkapillare (82) eine Stopverbindung (183) an der Innenwand des Saugers aufweist, die in einem vorgegebenen Abstand vom proximalen Ende der Saugerkapillare (82) angebracht ist und durch eine abrupte Vergrößerung des inneren Bohrungsdurchmessers der Saugerkapillare (82) ausgebildet wird, wobei der Abstand zwischen dem proximalen Ende der Saugerkapillare (82) und der Stopverbindung (183) letztendlich die Länge der Saugerkapillare (82) definiert, die durch eine Kapillarwirkung mit Probe (85) befüllt werden kann, wenn das proximale Ende der Saugerkapillare (82) in die Probe (85) eingetaucht wird.

17. Vorrichtung nach Anspruch 6, wobei jede Saugerkapillare (82) eine Stopverbindung (183) an der Innenwand des Saugers aufweist, die in einem vorgegebenen Abstand vom proximalen Ende der Saugerkapillare (82) angebracht ist und durch eine abrupte Änderung der Benetzungseigenschaften des inneren Bohrungsdurchmessers der Saugerkapillare (82) ausgebildet wird, wobei der Abstand zwischen dem proximalen Ende der Saugerkapillare (82) und der Stopverbindung (183) letztendlich die Länge der Saugerkapillare (82) definiert, die durch eine Kapillarwirkung mit Probe (85) befüllt werden kann, wenn das proximale Ende der Saugerkapillare (82) in die Probe (85) eingetaucht wird.

18. Vorrichtung nach Anspruch 6, wobei die Saugerkapillaren (82) aus Kunststoff bestehen und die Innenwände hydrophil genug für die Ausübung einer Kapillarwirkung sind.

19. Vorrichtung nach Anspruch 6, wobei die Mittel zur Bewegung von Flüssigkeit elektrokinetische Injektion sind.

20. Vorrichtung nach Anspruch 18, wobei ein Abschnitt der Innenwände der Saugerkapillare (82) mit einem oberflächenaktiven Stoff beschichtet ist.

21. Vorrichtung nach Anspruch 18, wobei ein hydrophiles Polymer auf einen Abschnitt der Innenwände der Saugerkapillare (82) aufgebracht ist.

22. Vorrichtung nach Anspruch 18, wobei ein Abschnitt der Innenwände der Saugerkapillaren (82) einer Plasmaätzbehandlung unterzogen wird.

23. Trennplatte (1) umfassend:
a) ein Gestell mit einem gemeinsamen Pufferreservoir (3) an einem Ende und einer Vielzahl von Probenstellen (2) am anderen Ende sowie jeweils einer Elektrode (5, 7) an jedem Ende, wobei in allen Probenstellen (2) eine Zellelektrode (6) angeordnet ist und mit der am Ende des Gestells in der Nähe der Probenstellen (2) befindlichen Elektrode (5) verbunden ist; und
b) Mittel zur Befestigung von Trennkapillaren (8) am Gestell, so dass zwischen den Elektroden (5, 7) eine elektrische Verbindung, sowie zwischen den Probenstellen (2) und dem gemeinsamen Pufferreservoir (3) ein Flüssigkeitskontakt besteht, wenn sich Flüssigkeit in den Probenstellen (2), den Trennkapillaren (8) und dem gemeinsamen Pufferreservoir (3) befindet.

24. System für die Analyse einer Anordnung von Proben (85) in einer Anordnung von Probenbehältern, umfassend:
a) Mittel zur gleichzeitigen Überführung mindestens eines Teils einer jeden Probe (85) in der Anordnung von Probenbehältern zu einer entsprechenden Anordnung von Trennkapillaren (101), wobei die Trennkapillaren (101) sich in der Trennplatte (100) nach Anspruch 1 befinden;
b) Mittel für die gleichzeitige Durchführung von elektrokinetischen Trennungen an der Anordnung von überführten Proben (85) innerhalb der Trennkapillaren (101); und
c) Mittel für die Analyse der Trennungen unter b).

25. System nach Anspruch 24, wobei die Anordnung der Proben (85) dem Abstandsformat einer 96, 192 oder 384 Wells enthaltenden Multiwellplatte entspricht.

26. Ein aus den Trennplatten (100) bestehendes Gefüge, bestehend aus mindestens zwei Trennplatten (100) nach Anspruch 1, bei denen die Anordnung der Trennkapillaren (8) angeordnet sind, so dass sie dem vertikalen und horizontalen Abstandsformat einer 96, 192 oder 384 Wells enthaltenden Multiwellplatte entsprechen.

27. Gefüge nach Anspruch 26, wobei mindestens ein unterschiedlicher Laufpuffer in mindestens einem Pufferreservoir (103) verwendet wird.

28. Verfahren zur Analyse einer Anordnung von Proben (85) in einer Anordnung von Probenbehältern, umfassend:
a) Bereitstellung einer Anordnung von Proben (85) in einer Anordnung von Probenbehältern;
b) gleichzeitige Überführung mindestens eines Teils einer jeden Probe (85) in der Anordnung von Probenbehältern zu einer entsprechenden Anordnung von Trennkapillaren (101), wobei die Trennkapillaren (101) sich in der Trennplatte nach Anspruch 1 befinden;
c) gleichzeitige Durchführung einer elektrokinetischen Trennung der überführten Proben; und
d) Analyse der Trennungen unter c).

29. Verfahren nach Anspruch 28, wobei die Anordnung von Proben (85) Nukleinsäure einer unterschiedlicher Länge darstellt.

30. Verfahren nach Anspruch 28, wobei die Anordnung von Proben (85) ein spezifisch bindendes Biomolekül, sein Bindungspartner oder der Komplex aus beiden ist.

31. Verfahren nach Anspruch 28, wobei die Anordnung von Trennkapillaren (101) zur Wiederverwendung für die Trennung weiterer Proben gespült wird.

32. Verfahren nach Anspruch 28, wobei eine oder mehrere Flüssigkeiten in die Wells der Probenbearbeitungsplatte (74) zugefügt und mit den Proben gemischt werden.

33. Verfahren zur Analyse einer Anordnung von Proben (85) in einer Anordnung von Probenbehältern mittels Kapillarelektrophorese, umfassend:
a) Bereitstellen einer Anordnung von Proben (85) in einer Anordnung von Probenbehältern;
b) gleichzeitige Überführung mindestens eines Teils einer jeden Probe in der Anordnung von Probenbehältern zu einer entsprechenden Anordnung von Kapillarelektrophoresesäulen (101) unter Verwendung der Vorrichtung nach Anspruch 6;
c) gleichzeitige Durchführung einer kapillarelektrophoretischen Trennung der überführten Proben; und
d) Analyse der kapillarelektrophoretischen Trennungen unter c).

34. Verfahren nach Anspruch 33, wobei die Anordnung von Proben (85) Nukleinsäure einer unterschiedlicher Länge darstellt.

35. Verfahren nach Anspruch 33, wobei die Anordnung von Proben (85) ein spezifisch bindendes Protein, sein Bindungspartner oder der Komplex aus beiden ist.

36. Verfahren nach Anspruch 33, wobei ein oder mehrere Reagenzien zu den Probenbehältem zugefügt und mit den Proben gemischt werden.

37. Verfahren zur Analyse einer Anordnung von Proben (85) in einer Anordnung von Probenbehältern mittels Kapillarelektrophorese, umfassend:
a) Aufnahme einer Anordnung von Probenteilen aus einer Anordnung von Proben (85) in Probenbehältern;
b) gleichzeitige Verarbeitung der Anordnung von Proben (85), um eine Anordnung von weiterverarbeiteten Proben bereitzustellen, und Darbietung der Anordnung von weiterverarbeiteten Proben für die Kapillarelektrophorese;
c) gleichzeitige Überführung einer Anordnung von weiterverarbeiteten Proben zu einer Anordnung von Kapillarelektrophoresesäulen (101) unter Verwendung der Vorrichtung nach Anspruch 6;
d) gleichzeitige Durchführung einer Kapillarelektrophorese an der Anordnung der Kapillarelektrophoresesäulen (101) unter c); und
e) Analyse der Kapillareelektrophoresesäulen (101) unter d).

## Revendications

1. Plaque de séparation (100) comprenant :
a) un cadre (102) ayant des première et seconde extrémités et ayant un ensemble de capillaires de séparation (101), les premières et secondes extrémités étant montées dans le cadre ;
b) la première extrémité du cadre ayant au moins un réservoir de solution tampon commun (103) et au moins une électrode (104) dans le réservoir de solution tampon commun (103), dans laquelle les premières extrémités des capillaires sont en communication fluidique avec le réservoir de solution tampon commun (103) ; et
c) la seconde extrémité du cadre (102) ayant des moyens destinés à placer les secondes extrémités des capillaires en contact avec un ensemble de sites d'échantillonnage (85) ou de sites de solution tampon circulante qui se trouvent chacun en contact avec une électrode (105), dans laquelle il existe une communication fluidique entre le réservoir de solution tampon commun (103) au niveau de la première extrémité du cadre et l'ensemble de sites d'échantillonnage (85) ou de sites de solution tampon circulante au niveau de la seconde extrémité du cadre (102) grâce aux capillaires de séparation (101) et dans laquelle il existe une communication électrique entre l'électrode (104) dans le réservoir de solution tampon commun (103) au niveau de la première extrémité du cadre et chaque électrode (105) dans l'ensemble de sites d'échantillonnage (85) ou des sites de solution tampon circulante au niveau de la seconde extrémité du cadre au moyen des capillaires de séparation (101).

2. Plaque de séparation (100) selon la revendication 1, dans laquelle la plaque comprend 8, 12, 16 ou 24 capillaires de séparation espacés pour correspondre au format d'espacement dans une rangée ou colonne de 8, 12, 16 ou 24 puits situés dans une plaque multipuits de 96, 192 ou 384 puits.

3. Plaque de séparation (100) selon la revendication 1, dans laquelle chaque électrode (105) est montée dans le cadre (102) à proximité des secondes extrémités des capillaires (101) de telle sorte que, lorsque les secondes extrémités des capillaires se trouvent dans les sites d'échantillonnage (85) ou dans les sites de solution tampon circulante au niveau de la seconde extrémité du cadre (102), il y ait une communication électrique entre l'électrode (104) située dans le réservoir de solution tampon (103) et chaque électrode (105) située à proximité des secondes extrémités des capillaires (101).

4. Plaque de séparation (100) selon la revendication 1, dans laquelle les électrodes (104) situées dans le réservoir de solution tampon (103) au niveau de la première extrémité de la plaque de séparation (100) et chaque électrode (105) située dans les sites d'échantillonnage ou dans les sites de solution tampon circulante au niveau de la seconde extrémité de la plaque de séparation (100) sont plaquées ou revêtues sur la partie extérieure des capillaires de séparation (101).

5. Plaque de séparation (100) selon la revendication 1 comprenant en outre un réservoir de stockage rempli de solution tampon (151) délivrant une solution tampon circulante (150) de manière à compléter le niveau du réservoir de solution tampon (103) au niveau de la première extrémité de la plaque de séparation (100), à évacuer et à remplir de nouveau les capillaires (101) et à délivrer une solution tampon circulante (150) aux secondes extrémités des capillaires (101) dans la plaque de séparation (100).

6. Appareil destiné à traiter un ensemble d'échantillons (85) contenant deux composants ou plus dans un ensemble de récipients pour échantillons comprenant :
une plaque de manipulation d'échantillons (71) qui définit un ensemble de puits de plaque de manipulation d'échantillons (74) et un ensemble de capillaires d'aspiration (82) ayant une paroi interne, une paroi externe, une extrémité distale, une extrémité proximale, un diamètre d'alésage interne et un diamètre d'alésage externe, dans laquelle chaque puits de la plaque de manipulation d'échantillons (71) se trouve en communication fluidique avec au moins un capillaire d'aspiration (82) et dans laquelle une matrice poreuse (80) est intercalée entre chaque capillaire d'aspiration (82) et le puits de la plaque de manipulation d'échantillons correspondant (74), et dans laquelle l'ensemble de capillaires d'aspiration (82) va simultanément se remplir d'échantillon, grâce à une action capillaire, à partir de l'ensemble de récipients pour échantillons ;
b) une plaque d'appui (72) qui définit une ouverture de manière à recevoir la plaque de manipulation d'échantillons (71) et qui définit une chambre interne, des moyens étant associés à la plaque d'appui (72) et à la plaque de manipulation d'échantillons (71) pour fermer hermétiquement la chambre interne (69) et pour fournir une chambre interne hermétique ; et
c) des moyens destinés à pressuriser et à évacuer la chambre interne hermétique (69) pour déplacer du liquide présent sur l'un quelconque des côtés de la matrice poreuse (80) vers l'autre côté de la matrice poreuse.

7. Appareil selon la revendication 6, dans lequel les capillaires d'aspiration (82) de la plaque de manipulation d'échantillons (71) se trouvent dans un ensemble qui correspond au format d'espacement d'une plaque multipuits de 96, 192 ou 384 puits.

8. Appareil selon la revendication 6, dans lequel les puits (74) de la plaque de manipulation d'échantillons (71) correspondent au format d'espacement d'une plaque multipuits de 96, 192 ou 384 puits.

9. Appareil selon la revendication 6, dans lequel les moyens destinés à la pressurisation et à l'évacuation sont programmés pour pressuriser et évacuer de manière alternée la chambre interne hermétique (69) afin de mélanger des fluides situés au-dessus de la matrice poreuse (80) avec un échantillon (85) situé en dessous de la matrice poreuse.

10. Appareil selon la revendication 6, dans lequel il est prévu au moins un puits de solution tampon circulante adjacent aux puits de plaque de manipulation d'échantillons (74).

11. Appareil selon la revendication 6, dans lequel la matrice poreuse (80) est une membrane.

12. Appareil selon la revendication 6, dans lequel la matrice poreuse (80) est un lit de particules polymères frittées.

13. Appareil selon la revendication 6, dans lequel la matrice poreuse (80) comprend un liant spécifique qui extrait au moins un composant de l'échantillon.

14. Appareil selon la revendication 6, dans lequel la membrane poreuse (80) est une membrane de filtration qui extrait tout matériau insoluble de l'échantillon,

15. Appareil selon la revendication 6, dans lequel la matrice poreuse (80) est une membrane d'ultrafiltration qui traverse des composants de faible poids moléculaire et retient les composants de poids moléculaire élevé.

16. Appareil selon la revendication 6, dans lequel chaque capillaire d'aspiration (82) possède une jonction d'arrêt (183) sur la paroi interne du capillaire d'aspiration, ladite jonction d'arrêt étant située à une certaine distance définie de l'extrémité proximale du capillaire d'aspiration (82), ladite jonction d'arrêt (183) étant créée par une augmentation soudaine du diamètre d'alésage interne du capillaire d'aspiration (82), la distance comprise entre l'extrémité proximale du capillaire d'aspiration (82) et la jonction d'arrêt (183) définissant efficacement la longueur du capillaire d'aspiration (82) qui peut être rempli d'échantillon (85) grâce à une action capillaire lorsque l'extrémité proximale du capillaire d'aspiration (82) est immergée dans l'échantillon (85).

17. Appareil selon la revendication 6, dans lequel chaque capillaire d'aspiration (82) possède une jonction d'arrêt (183) sur la paroi intérieure du capillaire d'aspiration, ladite jonction d'arrêt (183) étant située à une distance définie de l'extrémité proximale du capillaire d'aspiration (82), ladite jonction d'arrêt (183) étant créée par une modification soudaine des propriétés de mouillage du diamètre d'alésage interne du capillaire d'aspiration (82), la distance comprise entre l'extrémité proximale du capillaire d'aspiration (82) et la jonction d'arrêt (183) définissant efficacement la longueur du capillaire d'aspiration (82) qui peut être rempli d'échantillon (85) grâce à une action capillaire lorsque l'extrémité proximale du capillaire d'aspiration (82) est immergée dans l'échantillon (85).

18. Appareil selon la revendication 6, dans lequel les capillaires d'aspiration (82) sont fabriqués à partir de plastique, les parois internes étant suffisamment hydrophiles pour présenter une action capillaire.

19. Appareil selon la revendication 6, dans lequel les moyens destinés à déplacer du liquide sont mis en oeuvre grâce à une injection électrocinétique.

20. Appareil selon la revendication 18, dans lequel une partie des parois internes du capillaire d'aspiration (82) est revêtue d'un agent tensio-actif.

21. Appareil selon la revendication 18, dans lequel un polymère hydrophile est greffé sur une partie des parois internes du capillaire d'aspiration (82).

22. Appareil selon la revendication 18, dans lequel une partie des parois internes des capillaires d'aspiration (82) est soumise à un traitement d'attaque au plasma.

23. Plaque de séparation (1) comprenant :
a) un cadre ayant un réservoir de solution tampon commun (3) au niveau d'une extrémité et une pluralité de sites d'échantillonnage (2) au niveau de l'autre extrémité et ayant une électrode (5, 7) au niveau de chaque extrémité, dans lequel une électrode de cellule (6) est disposée dans chacun des sites d'échantillonnage (2) et est reliée à une électrode (5) placée à l'extrémité du cadre proche desdits sites d'échantillonnage (2) ; et
b) des moyens destinés à mettre en place des capillaires de séparation (8) sur le cadre de telle sorte qu'il y ait une communication électrique entre les électrodes (5, 7) et une communication fluidique entre les sites d'échantillonnage (2) et le réservoir de solution tampon commun (3) lorsqu'un fluide est présent dans les sites d'échantillonnage (2), dans les capillaires de séparation (8) et dans le réservoir de solution tampon commun (3).

24. Système destiné à analyser un ensemble d'échantillons (85) dans un ensemble de récipients pour échantillons comprenant :
a) des moyens destinés à transférer simultanément au moins une partie de chaque échantillon (85) dans l'ensemble de récipients pour échantillons vers un ensemble de capillaires de séparation correspondant (101), où les capillaires de séparation (101) se trouvent dans la plaque de séparation (100) selon la revendication 1 ;
b) des moyens destinés à réaliser simultanément des séparations électrocinétiques sur l'ensemble d'échantillons transférés (85) dans les capillaires de séparation (101) ; et
c) des moyens destinés à analyser les séparations obtenues à partir de b).

25. Système selon la revendication 24, dans lequel l'ensemble d'échantillons (85) correspond au format d'espacement d'une plaque multipuits de 96, 192 ou 384 puits.

26. Assemblage de plaques de séparation (100), se composant au moins de deux plaques de séparation (100) selon la revendication 1, dans lesquelles les capillaires de séparation (8) sont agencés de manière à correspondre à la fois au format d'espacement des rangées et des colonnes d'une plaque multipuits de 96, 192 ou 384 puits.

27. Assemblage selon la revendication 26, dans lequel au moins une solution tampon circulante différent est utilisé dans au moins un réservoir de solution tampon (103).

28. Procédé destiné à analyser un ensemble d'échantillons (85) dans un ensemble de récipients pour échantillons comprenant le fait de :
a) fournir un ensemble d'échantillons (85) dans un ensemble de récipients pour échantillons ;
b) transférer simultanément au moins une partie de chaque échantillon (85) dans l'ensemble de récipients pour échantillons vers un ensemble de capillaires de séparation correspondant (101), où les capillaires de séparation (101) se trouvent dans la plaque de séparation selon la revendication 1 ;
c) réaliser simultanément une séparation électrocinétique des échantillons transférés ; et
d) analyser les séparations obtenues à partir de c).

29. Procédé selon la revendication 28, dans lequel l'ensemble d'échantillons (85) est constitué d'acides nucléiques de longueur variable.

30. Procédé selon la revendication 28, dans lequel l'ensemble d'échantillons (85) constitue une biomolécule de liaison spécifique, son partenaire de liaison ou le complexe de ces deux éléments.

31. Procédé selon la revendication 28, dans lequel l'ensemble de capillaires de séparation (101) est rincé pour être réutilisé en vue de séparer des échantillons supplémentaires.

32. Procédé selon la revendication 28, dans lequel un ou plusieurs fluides est(sont) ajouté(s) aux puits de la plaque de manipulation d'échantillons (74) et mélangé (s) aux échantillons.

33. Procédé destiné à analyser un ensemble d'échantillons (85) dans un ensemble de récipients pour échantillons grâce à une électrophorèse capillaire, ledit procédé comprenant le fait de :
a) fournir un ensemble d'échantillons (85) dans un ensemble de récipients pour échantillons ;
b) transférer simultanément au moins une partie de chaque échantillon dans l'ensemble de récipients pour échantillons vers un ensemble correspondant de colonnes d'électrophorèse capillaire (101) à l'aide de l'appareil selon la revendication 6 ;
c) réaliser simultanément une séparation électrocinétique des échantillons transférés grâce à une électrophorèse capillaire ; et
d) analyser les séparations obtenues par une électrophorèse capillaire selon le point c).

34. Procédé selon la revendication 33, dans lequel l'ensemble d'échantillons (85) constitue un acide nucléique de longueur variable.

35. Procédé selon la revendication 33, dans lequel l'ensemble d'échantillons (85) est une protéine de liaison spécifique, son partenaire de liaison ou le complexe de ces deux éléments.

36. Procédé selon la revendication 33, dans lequel un ou plusieurs réactifs est(sont) ajouté(s) aux récipients pour échantillons et mélangé(s) aux échantillons.

37. Procédé destiné à l'analyse d'un ensemble d'échantillons (85) dans un ensemble de récipients pour échantillons par électrophorèse capillaire, ledit procédé comprenant le fait de ;
a) acquérir un ensemble d'aliquotes d'échantillon à partir d'un ensemble d'échantillons (85) dans des récipients pour échantillons ;
b) traiter simultanément l'ensemble d'échantillons (85) de manière à fournir un ensemble d'échantillons traités et soumettre l'ensemble d'échantillons traités à une électrophorèse capillaire ;
c) transférer simultanément un ensemble d'échantillons traités vers un ensemble de colonnes d'électrophorèse capillaire (101) à l'aide de l'appareil selon la revendication 6 ;
d) réaliser simultanément une électrophorèse capillaire sur l'ensemble de colonnes d'électrophorèse capillaire (101) obtenues à partir du point c) ; et
e) analyser les colonnes d'électrophorèse capillaire (101) obtenues à partir de d).
